# EUROPEAN PATENT SPECIFICATION

(11) **EP 4 085 162 B1**
(45) Date of publication and mention of the grant of the patent: **13.12.2023**
(21) Application number: 20845233.4
(22) Date of filing: 29.12.2020
(51) Int. Cl.: D01F 6/60, D01F 6/80, D02G 3/48, B60C 9/04, B60C 1/00, B60C 9/20, B60C 9/00, B60C 15/06

(54) **TYRES FOR VEHICLE WHEELS WITH REINFORCING ELEMENTS COMPRISING SEMI-AROMATIC POLYAMIDES**
REIFEN FÜR FAHRZEUGRÄDER MIT AUS SEMIAROMATISCHEN POLYAMIDEN BESTEHENDEN VERSTÄRKUNGSELEMENTEN
PNEUS POUR ROUES DE VÉHICULE COMPORTANT DES ÉLÉMENTS DE RENFORCEMENT COMPRENANT DES POLYAMIDES SEMI-AROMATIQUES

(30) Priority: 30.12.2019 IT 201900025789
(43) Date of publication of application: 09.11.2022
(73) Proprietor: Pirelli Tyre S.p.A., 20126 Milano (IT)
(72) Inventor: AGRESTI, Simone, 20126 Milano (IT); CARACINO, Paola, 20126 Milano (IT); HANEL, Thomas, 20126 Milano (IT); DE CANCELLIS, Pier Luigi, 20126 Milano (IT)
(74) Representative: PGA S.p.A.
(86) International application number: PCT/IB2020/062505
(87) International publication number: WO 2021/137146

(56) References cited:
- US-A1- 2016 107 485
- US-A1- 2016 339 746
- US-A1- 2019 301 057

## Description

### FIELD OF THE INVENTION

The present invention refers to reinforcing elements for tyres, to tyre components and to tyres for vehicle wheels that comprise them, in particular to high performance tyres subjected to severe operating conditions, such as for example racing tyres, in which said reinforcing elements comprise semi-aromatic polyamides. Advantageously the present reinforcing elements confer optimal mechanical performances to the tyre in which they are incorporated and allow the maintenance thereof also in extreme driving conditions.

### STATE OF THE ART

A tyre for vehicle wheels typically comprises a carcass structure associated with a belt structure and a tread band arranged in radially outer position with respect to the belt structure.

The carcass structure is intended, in addition to supporting the weight of the vehicle, to resist the inflation pressure and all the lateral and longitudinal stresses to which the moving tyre is subjected following the contact with the road surface.

The belt structure is intended to transfer to the carcass structure the aforesaid lateral and longitudinal stresses and contributes to conferring the desired characteristics of structural strength, adherence, driving stability, controllability, directionality, road grip, comfort and to maintain these performances over time.

Tyres which require particularly high reinforcement are the tyres of HP (High Performance) or UHP (Ultra High Performance) type. These types of tyres equip vehicles capable of offering high driving performances or which are subject to severe operating conditions.

The tyres which equip sport/racing vehicles must be able to ensure an optimal adherence to the ground in all driving conditions and especially during high-speed manoeuvres.

The governability of the vehicle perceived by the driver, hence the performance that the latter is able to attain, strictly depends on the adherence of the vehicle in any condition and is hence strictly related to the footprint area, i.e. to the surface of the tyre in contact with the road surface during the ground rolling thereof.

In sport/racing use on racetracks, in order to increase the footprint area on the ground of the tyre, the inflation pressure is sometimes reduced.

For each tyre, there is an ideal compromise for the inflation pressure, which balances, in the most useful manner, all the variations of the physical parameters induced by the pressure on the tyre itself.

A pressure decrease in fact involves both a decrease of the static rigidities, hence a greater elongation in every direction of the operating tyre itself, and a decrease of the dynamic rigidities, thus a lower capacity of the tyre to generate dynamic forces in reaction to the various stresses.

A tyre inflated to pressures lower than those of reference is more greatly deformed, and will inevitably find itself working at higher thermal operating conditions, which may involve a premature deterioration of the tyre since all the components, upon exceeding a certain level of exposure to the thermal stress, are deteriorated and lose physical and mechanical characteristics. In addition, the tyre is harder to govern and slow in the changes of direction due to the greater softness of the profile. Commonly in the sport/racing field, tyre structure are provided for which are capable of rendering the overall weight of the tyre relatively low, also reducing the vertical rigidity thereof due to the need to obtain the maximum possible footprint area. Nevertheless, for a "sport/racing" driving with sudden changes of direction and/or speed it is still necessary to be able to arrange an overall rigid structure, since a structure that is not very rigid does not allow the tyre to readily respond to the continuous stresses to which it is subjected, and consequently does not transmit to the driver the sensations that allow him/her to control the vehicle.

Typically, in the carcass structure and belt structure of the tyre, reinforcing elements of various nature are present - metallic or polymeric - embedded in a matrix of elastomeric material, for the purpose of stiffening while simultaneously seeking the best balancing of properties.

The polymeric materials most commonly used for making reinforcing elements for tyres include polyesters, rayon, lyocell and polyamides.

Polyesters, such as for example polyethylene terephthalate or polyethylene naphthalate, are generally poorly suitable for resisting strong stresses, since they show a decrease of the dynamic elastic modulus (E') when the temperature increases, and in fact their use is not recommended in tyres intended for high operating temperatures and performances. In addition, they have a non-optimal adhesion to the rubber.

Ryon and Lyocell have good tensile moduli, adhesion and fatigue strength that are satisfactory but poor size stability due to the tendency to absorb water. Polyamides are widely used in the field and have different properties depending on their nature.

Tyres intended for the above-specified use generally have a belt structure provided with a radially outer reinforcing layer constituted by textile nylon cords or, for high- end applications, aramid cords covered with elastomeric material, arranged at a substantially zero angle with respect to a circumferential direction of the tyre (zero degree belt).

The aliphatic polyamides or nylons, substantially derived from aliphatic acids and amines, are often employed as materials for reinforcing elements for tyres in HP or UHP applications for the optimal fatigue strength thereof. It is particularly important that the reinforcing elements resist the fatigue so as to prevent early or sudden structural yielding of the tyres, for example during racetrack competitions or in non-road uses.

The aliphatic polyamides are also appreciated for their good adhesion to the rubber, since they are easy to extrude under heat and, last but not least, they are inexpensive.

Nevertheless, the reinforcing elements comprising aliphatic polyamides have several disadvantages, such as absolute modulus values that are not very high and above all a drop of the dynamic mechanical properties in the conditions of maximum stress of the tyre.

In addition, these materials manifest an unsatisfactory size stability due to the tendency to absorb water.

Aromatic polyamides, however, such as aramids, derived from acids and amines that are substantially aromatic, are characterized by optimal impact and tensile strength, by a high dynamic modulus that is constant even with the increase of temperature, and by a high thermal resistance. The higher rigidity of the fibre confers to the tyre, slightly deflated, the same level of rigidity with respect to the reference tyre build with a nylon-based carcass material but inflated to the standard pressure. This solution allows enjoying the advantage given by the greater footprint area without the drawbacks due to the decrease of rigidity due to the tyre operating at a lower pressure than usual. In addition, the tyre built with carcass with aramid cords offers the pilot a more linear and more predictable response, rendering the vehicle more controllable, so as to allow the maintenance of high performances over short distance, typical of sport/racing use.

Nevertheless, aramid fibres have several limits such as poor fatigue strength - when they are subjected to repeated bending, above all under temperature conditions of 80°C - 100°C and beyond, which can be encountered in tyre operation during a race competition - and the poor adhesion to the rubber which can create problems of separation of the cord from the elastomeric matrix in the case of repeated cyclical stresses, and finally the high cost.

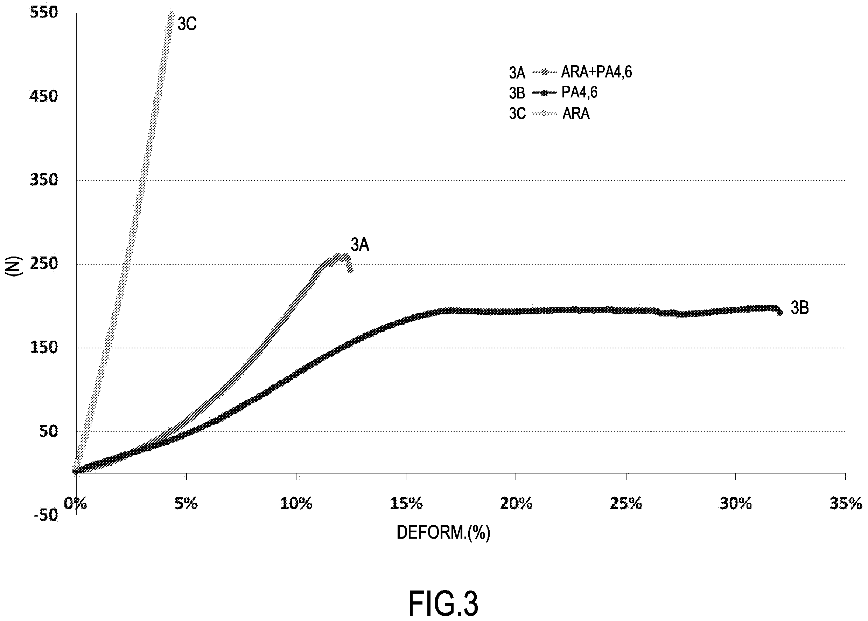

The significant difference of tensile behaviour of reinforcing elements comprising aliphatic or aromatic polyamides is well-illustrated by the force-elongation % diagram reported in the present Figure 3

The class of the semi-aromatic polyamides, derived from monomers in part aromatic and in part aliphatic, has up to now not been well researched for the specific application in reinforcing elements for tyres, in particular for high performance tyres, while it is widely employed for example for producing car parts, electrical components, household articles and the like, where these materials are not spun but processed via injection and moulding.

The patent application WO20151 07024A1 describes fibres and yarns, obtained from particular semi-aromatic polyamides intended for applications at high temperatures. Even if the document incidentally mentions the possible application in tyres of the fibres described therein, it does not provide any specific teaching or relevant supporting experimental data.

In particular, with regard to the static mechanical properties, WO2015107024A1 does not present information regarding the trend of the tensile moduli of the yarns to the different elongations. In addition, the document shows dynamic modulus values only at temperatures of little interest for use in tyres (Table 3, at 23°C, 200°C and 250°C), without investigating the interval around 100°C - 120°C that is actually reached in sport/race driving.

Ideally, with regard to the mechanical performances of a reinforcing element for tyres, it would be desirable to be able to reconcile the elongation strength of the aromatic polyamides with the optimal fatigue strength of the aliphatic polyamides.

The patent application US2016/107485 describes a hybrid cord for tyres, a method for manufacturing such cord and a high performance tyre that comprises it; the patent application US2016339746 describes a multifilament fibre with polyamide base, a cord comprising said fibre, a fabric comprising said cord, and a tyre comprising said fabric; the patent application US2019301057 describes a yarn with co-polyamide base and airbag which comprises such yarn. None of such documents describes or suggests a tyre comprising at least one reinforced structural element comprising at least one cross-linked elastomeric material and at least one elongated reinforcing element, object of the present invention.

### SUMMARY OF THE INVENTION

The Applicant has undertaken research in order to attain optimal reinforcing elements for tyres that showed the best performances in terms of tensile properties, such as high modulus and tensile strength, together with fatigue strength, size stability, improved adhesion and thermal stability.

In particular, with reference to the tensile properties, the Applicant has realized that an ideal reinforcing element for tyres must have a high tensile modulus at low deformations, analogous to the aromatic polyamides, in order to generally confer good mechanical properties to the structure of the tyre, but then be more ductile and not encounter phenomena of breakage from fatigue with high stresses. Unfortunately, the reinforcing elements made with conventional materials, such as aramids (aromatic) or nylons (aliphatic) do not have this particular trend of the tensile properties.

As can be seen from the force elongation % diagram of Figure 3, such result cannot be reached even by incorporating aramid fibres and nylon fibres in the same elongated reinforcing element (here PA4,6): the hybrid fibres in fact have neither the high modulus and reinforcement of the aramid nor the ductility of the nylon at greater elongations, quickly reaching breakage.

The Applicant has surprisingly found that semi-aromatic polyamides, in particular having glass transition temperature Tg of at least 90°C, if suitably stretched, provide reinforcing elements that have ideal mechanical characteristics for use in tyres, combining tensile strength and fatigue strength.

These mechanical properties, ideal for particularly challenging applications such as for tyres of sport/racing vehicles, are reflected in the bimodal trend of the tensile modulus of the yarns, modulus that appears high for low elongations and lower for greater elongations.

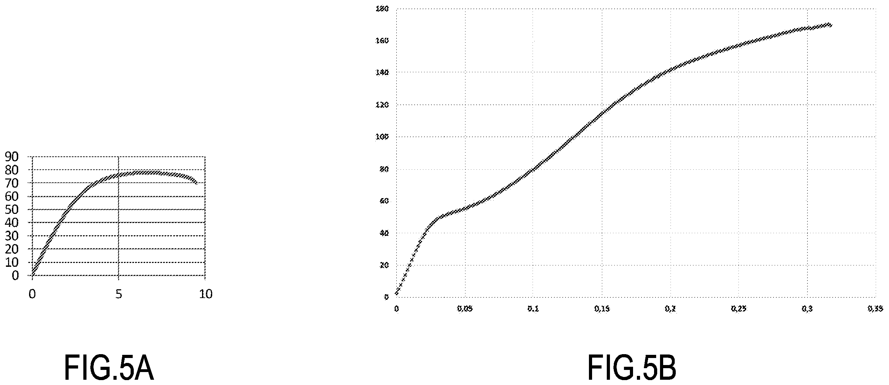

The bimodal trend of the modulus is particularly surprising if one considers that this is not shown for the semi-aromatic polyamide as is but only after spinning, in the stretched yarns that comprise it, as shown in the force - elongation % graphs of figure 5.

The Applicant has also observed that these reinforcing elements show a dynamic modulus practically constant up to the maximum temperatures in the order of 100°C - 120°C reached by the tyre in extreme driving conditions. This thermal stability of the mechanical properties is particular important in order to prevent the fall of the performances of the tyre during use, especially in sport/racing driving.

Finally, the reinforcing elements comprising the present semi-aromatic polyamides are advantageously characterized by good chemical resistance and poor absorbency.

Due to the presence in the carcass structure and/or belt structure of reinforcing elements comprising these semi-aromatic polyamides it is possible to maintain the performances of the tyre for prolonged stresses and in all the conditions, independent of its overheating during use. The maintenance of the performances is particularly important in sport/race driving, for example in driving race cars or racing motorcycles.

Therefore a first aspect of the present invention is constituted by a tyre for vehicle wheels comprising at least one reinforced structural element comprising at least one cross-linked elastomeric material and at least one elongated reinforcing element, in which said at least one elongated reinforcing element comprises one or more polymeric threads comprising at least one semi-aromatic polyamide having a glass transition temperature (Tg) greater than 90°C measured by DSC according to ISO-11357-1/3, 2011, characterized in that
said at least one elongated reinforcing element shows in the diagram tenacity - elongation % measured according to the Bisfa method (Test methods for para-aramid fibre yarns, 2002 edition) a bimodal trend of tenacity, characterized by an incremental ratio R between the chord modulus E1 and the chord modulus E2 greater than 1,
where the chord modulus E1 represents the ratio between the variation of the tenacity and the variation of the elongation measured at 2% and at 0% elongation, and the chord modulus E2 represents the ratio between the variation of the tenacity and the variation of the elongation measured at 6% and at 2% elongation, respectively.

A further aspect of the present invention is represented by an elongated reinforcing element for tyres comprising one or more polymeric threads comprising at least one semi-aromatic polyamide having a glass transition temperature (Tg) greater than 90°C measured by DSC according to ISO-11357-1/3, 2011, characterized in that said at least one elongated reinforcing element shows in the diagram tenacity - elongation % measured according to the Bisfa method (Test methods for para-aramid fibre yarns, 2002 edition) a bimodal trend of tenacity, characterized by an incremental ratio R between the chord modulus E1 and the chord modulus E2 greater than 1,
where the chord modulus E1 represents the ratio between the variation of the tenacity and the variation of the elongation measured at 2% and at 0% elongation, and the chord modulus E2 represents the ratio between the variation of the tenacity and the variation of the elongation measured at 6% and at 2% elongation, respectively.

A further aspect of the present invention is represented by a reinforcing fabric for tyre comprising at least one elongated reinforcing element according to the invention.

A further aspect of the present invention is represented by a tyre component comprising at least one elongated reinforcing element or a reinforcing fabric according to the invention incorporated in, or at least partially covered by, an elastomeric compound for tyres.

A further aspect of the present invention is represented by a process for the production of the polymeric thread of the elongated reinforcing element according to the invention, which comprises:
a) providing a polyamide composition comprising at least one semi-aromatic polyamide having a glass transition temperature (Tg) greater than 90°C measured by DSC according to ISO-11357-1/3, 2011,
b) melting said polyamide composition at a temperature not greater than the Tm+15°C, in which Tm is the melting temperature of the semi-aromatic polyamide measured by DSC according to ISO-1 1357-1/3, 2011 to give a melted polyamide composition,
c) extruding the melted polyamide composition to give a polymeric thread and cooling the polymeric thread,
d) stretching the cooled polymeric thread to a stretching temperature Ts less than the Tm and greater than the Tg, in one or more stretching steps, with a total stretching ratio greater than 2.9:1.
e) optionally, allowing the stretched polymeric thread to relax at a temperature comprised between the stretching temperature Ts and the melting temperature Tm.

A further aspect of the present invention is represented by the use of at least one elongated reinforcing element according to the invention in the carcass structure of a high performance tyre.

### DEFINITIONS

In the following present description and in the subsequent claims, when reference is made to specific values of specific angles, absolute values are intended, that is whether positive values or negative values with respect to a plane or a direction of reference, except if otherwise specified.

In the present description and in the subsequent claims, when reference is made to any interval of values comprised between a minimum value and a maximum value, the aforesaid minimum and maximum values are intended included in the aforesaid interval, except if otherwise expressly stated.

The term "equatorial plane" of the tyre indicates a plane perpendicular to the rotation axis of the tyre and which divides the tyre into two symmetrically equal parts.

The terms "radial" and "axial" and the expressions "radially inner/outer" and "axially inner/outer" are used with reference respectively to a direction substantially parallel to the equatorial plane of the tyre and to a direction substantially perpendicular to the equatorial plane of the tyre, i.e. respectively to a direction substantially perpendicular to the rotation axis of the tyre and to a direction substantially parallel to the rotation axis of the tyre.

The terms "circumferential" and "circumferentially" are used with reference to the direction of the annular extension of the tyre, i.e. to the rolling direction of the tyre, which corresponds to a direction lying on a plane coinciding or substantially parallel to the equatorial plane of the tyre.

With "substantially axial direction" it is intended a direction tilted, with respect to the equatorial plane of the tyre, by an angle comprised between about 70° and about 90°.

With "substantially circumferential direction" it is intended a direction stretched, with respect to the equatorial plane of the tyre, by an angle comprised between about 0° and about 10°.

For the purposes of the present description and of the following claims, the term "phr" (parts per hundreds of rubber) means the parts by weight of a specific component of the elastomeric composition per 100 parts by weight of the diene elastomeric polymer.

If not otherwise indicated, all the percentages are expressed as percentages by weight.

The term "bending point" referred to a curve is the point at which a change of curvature or of convexity is manifested. In the bending point, the tangent traverses the curve.

In the present description, the term "elastomeric polymer", "elastomeric material", "rubber" or "elastomer" it is intended a natural or synthetic material which, after vulcanisation, at ambient temperature can be repeatedly stretched to at least twice its original length and which after removal of the tensile force returns substantially immediately and with force to its approximately original length (according to the definitions of the standard ASTM D1566-11 Standard terminology relating to Rubber).

With the term "elastomeric composition for tyres" it is intended a composition, comprising at least one diene elastomeric polymer and one or more conventional additives, which due to mixing and possible heating provides an elastomeric compound suitable for use in tyre components.

The term "elastomeric compound" indicates a compound obtainable via mixing and possible heating of at least one elastomeric polymer with at least one of the additives commonly employed in the preparation of compounds for tyres.

The term "vulcanisable elastomeric compound" indicates an elastomeric compound ready for vulcanisation, obtainable via incorporation in an elastomeric compound of all the additives including those of vulcanisation.

The term "polyamide composition" intends to indicate a composition comprising at least one semi-aromatic polyamide as defined herein, preferably in a quantity of at least 20%, 30 %, 40% or at least 50% by weight with respect to the overall weight of the composition itself.

The term "green" is generally employed for indicating a material, a compound, a composition, a component or a tyre that is not yet vulcanised.

The term "reinforcing filler" indicates a reinforcing material typically employed in the field in order to improve the mechanical properties of the tyres, such as carbon black, silica, diatomaceous earth, calcium carbonate, titanium dioxide, talc, alumina, aluminosilicates, kaolin, silicate fibres and mixtures thereof.

The term "thread" indicates the single elongated element constituted by a single textile filament, also termed "monofilament". The polymeric thread is also termed filament.

The term "yarn" indicates the elongated element constituted by the aggregation of a plurality of textile filaments (in which case also the expression "multifilament textile yearn" will be used). The yarn can be composed of one or more ends.

The term "end" indicates a bundle of filaments that are twisted with respect to each other.

The term "strand" indicates the joining of at least two or more ends.

The term "twisting" indicates the spiral winding of the fibres which constitute a yarn, if this has a single end, or of the component elements (ends) if it is twisted.

The term "elongated reinforcing element" indicates the elongated reinforcing element constituted by one or more twisted and coupled ends that are optionally covered by, or incorporated in, a matrix of elastomeric material. The elongated reinforcing element is also termed reinforcing cord or more simply cord.

The term "elongated reinforcing element made adhesive" indicates the elongated reinforcing element which has been subjected to a treatment with a suitable adhesive composition.

The term "hybrid elongated reinforcing element or hybrid cord" indicates an elongated multifilament reinforcing element comprising at least one filament attained with at least one semi-aromatic polyamide having a Tg of at least 90°C, and melting temperature Tm preferably less than 310°C, and at least one other filament attained with a different material from said semi-aromatic polyamide. Such hybrid reinforcing elements are attained from a first textile yarn and a second textile yarn roped together.

Alternatively, two or more of the present semi-aromatic polyamides can be co-extruded in the same filament together with other polymers, giving rise to hybrid filaments. The hybrid filaments can then be processed on their own or together with filaments of different composition, to give hybrid cords.

The term "non-hybrid elongated reinforcing element or non-hybrid cord" indicates a reinforcing element comprising threads entirely constituted by one or more semi-aromatic polyamides having a Tg of at least 90°C and melting temperature Tm preferably less than 310°C.

The term "reinforcing fabric" termed reinforcing ply indicates the fabric obtained via weaving of the elongated reinforcing element. Cords and reinforcing fabrics are collectively also indicated herein as "reinforcing materials".

The term "diameter" referred to an elongated reinforcing element or cord, to a thread or yarn, indicates the diameter measured as prescribed by the Bisfa method (Test methods for para-aramid fibre yarns 2002 edition).

In the case of yarns, by "diameter" it is intended the diameter of an ideal circumference which circumscribes all the filaments which define the yarn.

The term "linear density" or "thread count" of an elongated reinforcing element or of a thread or of an end indicates the weight of the reinforcing element or of the thread or of the end per unit of length. The thread count can be measured in dtex (grams per 10 km of length). For the measurement of the linear density, reference is made to flat threads/yarns, without twists applied during testing or during roping, according to the tests established by BISFA (Bureau International pour la Standardisation des Fibres Artificielles).

The term "force at break" of an elongated reinforcing element intends to indicate the force at which the breakage occurs, evaluated with the Bisfa method (Test methods for para-aramid fibre yarns 2002 edition).

The term "elongation at break %" of an elongated reinforcing element intends to indicate the percentage elongation at which the breakage occurs, evaluated with the Bisfa method (Test methods for para-aramid fibre yarns 2002 edition).

In the textile field, with "tenacity" it is intended the resistance to breakage of the yarn in relation to the unit thread count. It can be expressed in cN/tex or cN/dtex. The tenacity values indicate the behaviour of the material at the extreme limit of the stress. In order to have information on the stresses comprised between zero and the breakage limit, the diagram of the tenacity / elongation % is used.

The term "modulus" generally indicates the property of a material representative of its resistance to elongation. The tensile modulus in the present context refers to the Bisfa standard (Test methods for para-aramid fibre yarns 2002 edition) and expresses the ratio between the tenacity and the elongation % of the material in the tensile tests.

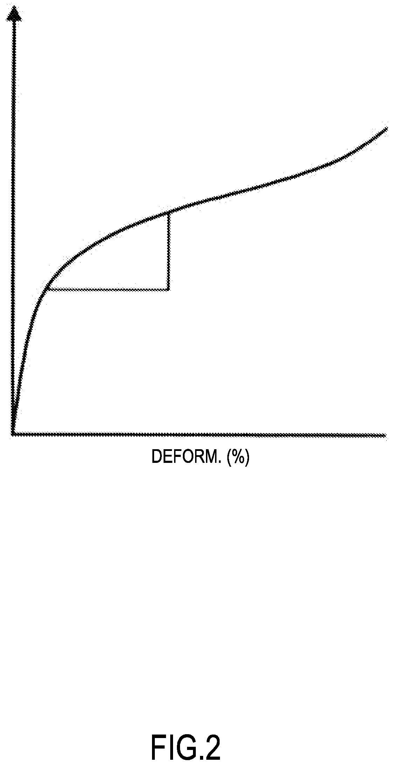

In particular, in the curve of tenacity - elongation %, the standard defines as "chord modulus" the ratio between the variation in tenacity and the variation in elongation between two specific points on the curve, as schematized in Figure 2.

The term "ductility" indicates the capacity of a material to sustain a significant plastic deformation before the breakage.

The term "density" of a layer indicates the number of reinforcing elements per unit of length present in such layer. The density can be measured in cords/dm (number of cords per decimetre).

The term "polyamide" indicates a macromolecule comprising repeating units bound by amide bonds -CO-NH-, derived from the condensation of at least one dicarboxylic acid with at least one diamine and/or from the condensation of at least one amino acid or relative lactam.

The term "aliphatic polyamide", in line with the definition BISFA 2017, indicates a macromolecule having repeating amide bonds in the chain, of which at least 85% is bound to aliphatic units.

The term "aromatic or aramid polyamide" indicates a polyamide in which at least 85% of the amide bonds is directly bound to aromatic rings.

The term "semi-aromatic polyamide" indicates a polyamide derived via condensation of at least one dicarboxylic acid with at least one diamine, in which at least 50% in moles of the dicarboxylic acid portion is constituted by residues of at least one dicarboxylic aromatic acid, in which at least 85% in moles of the diamine is aliphatic.

The term "polyphthalamide" or PPA according to ASTM D5336 indicates a semi-aromatic polyamide in which the residues of terephthalic or isophthalic acid or a combination of the two are equal to at least 55% molar of the dicarboxylic acid portion of the repeating structural units of the polymer chain.

The term "radial carcass structure" indicates a carcass structure comprising a plurality of reinforcing elements, each of which lying along a substantially axial direction. Such reinforcing elements can be incorporated in a single carcass ply or in multiple carcass plies (preferably two) that are radially superimposed on each other.

The term "cross belt structure" indicates a belt structure comprising a first belt layer including reinforcing elements substantially parallel to each other and tilted with respect to the equatorial plane of the tyre by a predetermined angle and at least one second belt layer arranged in radially outer position with respect to the first belt layer and including reinforcing elements substantially parallel to each other by lying, with respect to the equatorial plane of the tyre, with tilt opposite that of the reinforcing elements of the first layer.

The term "zero degree belt structure" indicates a reinforcing layer comprising at least one elongated reinforcing element wound on the belt structure according to a substantially circumferential winding direction, i.e. according to a winding direction having a tilt less than 6° with respect to the equatorial plane of the tyre.

The term "stretching ratio" indicates the ratio between the diameter of the fibre before and after the stretching.

### DESCRIPTION OF THE FIGURES

Further characteristics and advantages of the tyre of the present invention will be clearer from the following detailed description of several preferred embodiments thereof, made with reference to the enclosed drawings only as a non-limiting example. In such drawings:
Figure 1 illustrates, in radial half-section, a tyre for vehicle wheels, comprising the reinforcing elements according to the invention.
Figure 2 shows the exemplifying diagram of force (tenacity) vs. deformation % reported by the standard Bisfa (Test methods for para-aramid fibre yarns 2002 edition) for calculating the chord modulus.
Figure 3 shows the diagram force - deformation % at 20°C relative to three cords constituted respectively by aramid combined with PA4,6 (3A hybrid cord), by only PA4,6 (3B) and by only aramid (3C).
Figure 4 shows the diagram of force - deformation % at 20°C relative to four cords constituted respectively by aramid (1670x2) (4A), by PA4,6 (4B), by aramid combined with PA4,6 (hybrid cord, 4C) and by PPA2 (4D).
Figure 5 shows the diagrams of force - deformation % measured on specimens of polymer PPA2 (Fig. 5A) and on cord made adhesive composed of stretched yarns of the same PPA2 (Fig. 5B).
Figure 6 shows the diagram Tenacity (cN/dtex) - deformation % relative to three cords made adhesive, constituted respectively by
   cord 5: PPA2 (1680x3) (Tm 286°C, Tg 132°C, stretching ratio 3.4:1),
   cord 6: PPAO (1260×1) (Tm 298°C, Tg 100°C, stretching ratio 3.7:1),
   cord 7: PPA1 (1270x1) (Tm 312°C Tg 140°C, stretching ratio 2.5:1).
Figure 7 shows the diagram Tenacity (cN/dtex) - deformation % relative to two cords constituted respectively by PA4,6 (1400x2) (stretching ratio 3:1) (7A) and PA6,6 (1400x2) (stretching ratio 3:1) (7B).
Figure 8 shows the spectrum 1H-NMR with relative enlargements of a specimen of PPA2.
Figure 9 shows the spectrum 13C-NMR with relative enlargements of a specimen of PPA2.
Figure 10 shows the trend of the dynamic elastic modulus of a cord constituted by a semi-aromatic polyamide (PPA2 -11270x1 0x150) (10A), of a cord constituted by aliphatic polyamide (PA4,6 - 1400x1 0x150) (10B) and of a cord constituted by aliphatic polyamide (PA6,6 - 1400x1 0x150) (10C) with the increase of the temperature (static load 0.3 N - 10 Hz- dynamic deformation 0.05%) measured according to the DMA method described in the present experimental part.

### DETAILED DESCRIPTION OF THE INVENTION

The reinforcing element of the invention is characterized by one or more of the following characteristics taken separately or in combination.

The reinforcing element according to the invention is characterized by the bimodal trend of the tensile modulus, modulus which appears high for low elongations and reduced for greater elongations.

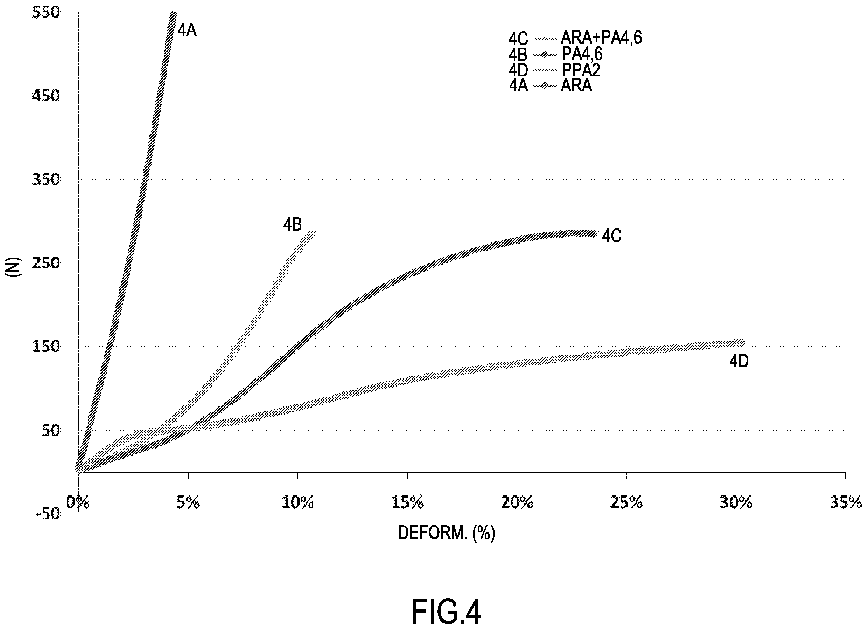

In particular, in the diagram tenacity - elongation % of the material, measured according to Bisfa Ed. 2002, one observes a point of change of the slope of the curve with higher values of modulus typical of aramid in the elongation interval from 0 to 3% and lower values characteristic of nylons for deformations greater than 3%. This unexpected bimodal trend of the modulus clearly appears in Fig. 4, in which it is compared with the nearly rectilinear one of aramid and the sigmoid one of PA4,6. In this diagram, it is shown that the point of change of the slope of the curve relative to the semi-aromatic polyamide is situated in an elongation interval of about 1 to 3 %.

The bimodal trend of the tenacity of the elongated reinforcing element in the diagram tenacity - elongation % measured according to the Bisfa method (Test methods for para-aramid fibre yarns 2002 edition) is characterized by an incremental ratio R between the chord modulus E1 and the chord modulus E2 preferably greater than 1.1, more preferably greater than 1.2. Figure 2 reports an example of a diagram tenacity - deformation % for the purpose of determining the chord modulus according to the norm.

The elongated reinforcing element comprises one or more polymeric threads comprising at least one semi-aromatic polyamide having a glass transition temperature (Tg) preferably greater than 100°C, more preferably greater than 120°C, measured by DSC according to ISO-11357-1/3, 2011.

Preferably said semi-aromatic polyamide has a melting temperature Tm less than 310°C, more preferably less than 300°C, still more preferably less than 290°C, measured by DSC according to ISO-11357-1/3, 2011.

The reinforcing element according to the invention comprising one or more polymeric threads comprising at least one semi-aromatic polyamide having Tg of at least 90°C and preferably melting temperature Tm less than 310°C, more preferably a Tg of at least 100°C and a Tm less than 300°C, still more preferably a Tg of at least 120°C and a Tm less than 290°C.

These semi-aromatic polyamides, in addition to imparting the previously-discussed performance advantages to the reinforcing elements, have thermal properties suitable for hot extrusion, minimising the problems of thermal degradation.

The Applicant has also observed that these yarns show a dynamic modulus that is practically constant in the temperature interval of interest for use in tyres.

In particular, said reinforcing elements comprising the present semi-aromatic polyamides have a decrease of the dynamic modulus between 25°C and 100°C preferably less than 15%, measured with DMA according to the standard ASTM D5026.

This characteristic is of interest in the field, since the tyre, especially if subjected to extreme driving conditions such as in sport/racing competitions, encounters heating so that the temperature within the compounds can considerably increase, even reaching 100°C - 120°C. In these conditions, the reinforcing elements, especially if made of nylon, can manifest a dangerous drop of the mechanical performances, more or less marked, with the increase of the temperature, which at the level of the tyre translates into a reduction of directional stability and drivability, into a worsening of the road grip and of the readiness of response of the vehicle, for example to sudden accelerations.

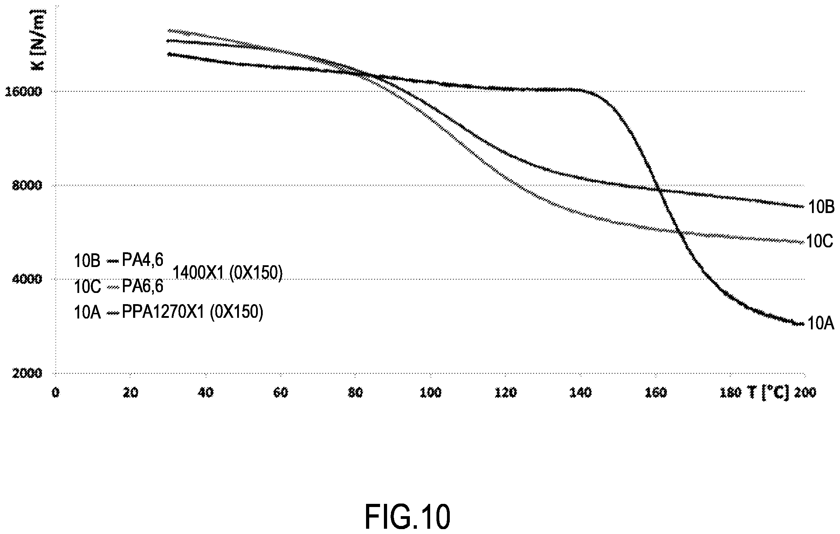

This deterioration of the mechanical properties is already detectable in the yarns through the measurement of their dynamic elastic modulus at the different temperatures, as shown in the diagram of Figure 10, where the elongated reinforcing elements constituted by aliphatic polyamide (PA4,6 and PA6,6) have a clear drop of the performances already before 100°C (curves 10C and 10B) while the semi-aromatic polyamide PPA2 of the reinforcing element of the curve 10A allows ascending well beyond with the temperatures without encountering significant failure.

Advantageously the fibres obtained with the present semi-aromatic polyamides preserve the mechanical performances even at the highest operating temperatures of the tyre (e.g. 120°C).

The semi-aromatic polyamide of the reinforcing element according to the invention is a polyamide derived from condensation of at least one dicarboxylic acid with at least one diamine, in which at least 50% in moles of the dicarboxylic acid portion is constituted by residues of at least one dicarboxylic aromatic acid and in which at least 85% in moles of the diamine is aliphatic.

The semi-aromatic polyamide is preferably a semi-aromatic semi-crystalline polyamide constituted by
- 95-100% in moles of monomer units derived from at least one diamine a) and from at least one dicarboxylic acid b), and
- 0-5% in moles of other monomer units c),
with respect to the total percentage in moles of monomer units, in which the at least one diamine a) comprises at least 90% or at least 95% in moles of at least one aliphatic diamine with respect to the total quantity of diamine, and the at least one dicarboxylic acid b) comprises at least 50%, 55% or 60% in moles with respect to the total quantity of dicarboxylic acid of at least one aromatic dicarboxylic acid.

In one embodiment, in the aforesaid semi-aromatic polyamide the at least one dicarboxylic acid b) comprises at least 70%, at least 80%, at least 90% or at least 95% in moles of at least one aromatic dicarboxylic acid, with respect to the total quantity of dicarboxylic acid.

Preferably the semi-aromatic polyamide is constituted by
- 98-100% in moles, of monomer units derived from at least one diamine a) and from at least one dicarboxylic acid b), and
- 0 - 2% in moles, of other monomer units c),
with respect to the total percentage in moles of monomer units, in which the at least one diamine a) comprises at least 90% or at least 95% in moles of at least one aliphatic diamine with respect to the total quantity of diamine, and the at least one dicarboxylic acid b) comprises at least 50%, 55% or 60% in moles of at least one aromatic dicarboxylic acid, with respect to the total quantity of dicarboxylic acid.

In the semi-aromatic polyamide, the at least one diamine a) comprises at least 90%, preferably at least 95% or 100% in moles of one or more diamines selected from among the linear aliphatic diamines, the branched aliphatic diamines, the cycloaliphatic diamines and mixtures thereof.

The linear aliphatic diamine is a diamine which comprises two amino groups bound to the ends of a linear aliphatic chain ( "alpha-omega" diamine).

For example, the linear aliphatic diamine can be selected from among 1,2-ethanediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, and mixtures thereof.

Preferably the linear aliphatic diamine is selected from between 1,4-butanediamine and 1,6-hexanediamine, and mixtures thereof.

The branched aliphatic diamine can for example be 2-methyl-1,5-pentanediamine. The cycloaliphatic diamine is preferably selected from among 1,3-diaminocyclohexane, 1,4-diaminocyclohexane, 4,4'-methylene-bis(cyclohexylamine), 4,4'-methylene-bis(2-methylcyclohexylamine); 3, 3', 5, 5' - tetramethyl- 4,4' -diaminocyclohexylmethane; 2,2',3,3'-tetramethyl-4,4'-diaminocyclohexylmethane; norbornanediamine; and isophoronediamine and mixtures thereof.

Preferably the cycloaliphatic diamine is 1,4-diaminocyclohexane.

If the at least one diamine a) as defined above does not amount to 100% in moles of the amino portion of the semi-aromatic polyamide, the completion to 100% can be constituted by one or more other diamines.

Examples of such other diamines can be aralkyldiamines such as m-xylene diamine (MXD) or p-xylene diamine (PXD).

In the semi-aromatic polyamide, the at least one dicarboxylic acid b) comprises at least 50%, 55% or 60% in moles with respect to the total quantity of dicarboxylic acid of at least one aromatic dicarboxylic acid.

In one embodiment, in the aforesaid semi-aromatic polyamide the at least one dicarboxylic acid b) comprises at least 70%, at least 80%, at least 90% or at least 95% in moles of at least one aromatic dicarboxylic acid with respect to the total quantity of dicarboxylic acid.

In one embodiment, in the aforesaid semi-aromatic polyamide the at least one dicarboxylic acid b) can comprise from 50% to 80% in moles, from 55% to 70% in moles or from 60% to 65% in moles of at least one aromatic dicarboxylic acid with respect to the total quantity of dicarboxylic acid.

In the semi-aromatic polyamide, the at least one aromatic dicarboxylic acid b) can be selected from among terephthalic acid, isophthalic acid, a naphthalene-dicarboxylic acid, such as 2,6 naphthalene-dicarboxylic acid, 1,4 naphthalene-dicarboxylic acid, 1 ,5-naphthalene-dicarboxylic acid, 2,7- naphthalene-dicarboxylic acid, a diphenyl-dicarboxylic acid such as 3,3'-diphenyl-dicarboxylic acid, 3,4'-diphenyl-dicarboxylic acid, 4,4'- diphenyl-dicarboxylic acid and mixtures thereof.

In one embodiment the dicarboxylic acid b) comprises at least 80%, at least 90% or 100% in moles of terephthalic acid with respect to the total quantity of dicarboxylic acid.

In one embodiment the dicarboxylic acid b) comprises not over 25% in moles, not over 20% in moles, preferably not over 15% in moles of isophthalic acid with respect to the total quantity of dicarboxylic acid.

In one embodiment the dicarboxylic acid b) comprises from 50% to 70% in moles of terephthalic acid with respect to the total quantity of dicarboxylic acid.

In one embodiment the dicarboxylic acid b) comprises from 30% to 50% in moles of isophthalic acid with respect to the total quantity of dicarboxylic acid.

In one embodiment the dicarboxylic acid b) comprises from 50% to 100% in moles of a naphthalene-dicarboxylic acid, of a diphenyl-dicarboxylic acid or of mixtures thereof with respect to the total quantity of dicarboxylic acid.

In one embodiment the dicarboxylic acid b) comprises less than 50%, preferably less than 40%, more preferably less than 30% in moles of a naphthalene-dicarboxylic acid, of a diphenyl-dicarboxylic acid or of mixtures thereof with respect to the total quantity of dicarboxylic acid.

In the event that the at least one aromatic dicarboxylic acid b) as described above does not amount to 100% in moles of the carboxylic acid portion of the semi-aromatic polyamide, the completion to 100% can be constituted by one or more aliphatic dicarboxylic acids.

Examples of such aliphatic dicarboxylic acids are adipic acid, sebacic acid and mixtures thereof.

Preferably, in the semi-aromatic polyamide the at least one dicarboxylic acid b) does not comprise more than 90% in moles, more than 80% in moles, more than 70% in moles or more than 60% in moles of the at least one aromatic dicarboxylic acid with respect to the total quantity of dicarboxylic acid.

In a preferred embodiment, in the semi-aromatic polyamide the at least one dicarboxylic acid b) is constituted from 50% to 80% in moles by at least one aromatic dicarboxylic acid and from 30% to 50% in moles by at least one aliphatic dicarboxylic acid.

The semi-aromatic polyamide can comprise 0-5% mole, preferably 0-2% mole of monomer units different from those derived from the dicarboxylic acid b) and from the diamine a).

These can comprise one or more components selected from among amino acids, monofunctional compounds such as monoamines and monocarboxylic acids, polyfunctional compounds, i.e. with three or more functional groups, such as for example the triamines and tricarboxylic acids.

Examples of amino acids are ε-aminocaproic acid, 11-amino-1-undecanoic acid and 12-amino-1-dododecanoic acid or the respective lactams such as caprolactam, undecane-11-lactam and laurolactam.

Examples of monoamines are stearylamine, dodecylamine or decylamine. Examples of monocarboxylic acids are stearic acid, benzoic acid, acetic acid and propanoic acid.

An example of triamine is bis(hexamethylene)triamine.

An example of tricarboxylic acid is trimesic acid.

The total quantity of these other monomer units is not greater than 5% in moles, preferably not greater than 3% in moles, more preferably not greater than 2% in moles with respect to the total quantity of the components of the semi-aromatic polyamide.

Preferably, the semi-aromatic polyamide comprises less than 1%, less than 0.50%, less than 0.20% in moles of polyfunctional monomer units with respect to the total quantity of the components of the semi-aromatic polyamide.

A particularly preferred semi-aromatic polyamide is a "polyphthalamide" or PPA in which the residues of terephthalic acid or isophthalic acid or a combination of the two are equal to at least 55% molar of the portion of dicarboxylic acid of the repeating structural units of the polymer chain.

Preferably the semi-aromatic polyamide is characterized by a crystallinity that is at least 50%, more preferably at least 60%, still more preferably at least 70%. Preferably the semi-aromatic polyamide is characterized by a density greater than 1.2 g/dm³, more preferably greater than 1.4 g/dm³.

Preferably the semi-aromatic polyamide is a PPA as previously defined, characterized by a Tg of at least 90°C and preferably by a Tm less than 310°C. Preferably the semi-aromatic polyamide has a melting temperature Tm less than 310°C or 305°C, more preferably less than 300°C, still more preferably less than 290°C measured by DSC according to ISO-11357-1/3, 2011.

Preferably the semi-aromatic polyamide is characterized by a Tm greater than 200°C, more preferably greater than 220°C.

The use of yarns attained with semi-aromatic polyamide, which melt at temperatures higher than 200°C, is preferably in order to prevent the possible melting of the yarn during tyre building.

Preferably the semi-aromatic polyamide has a melting temperature Tm less than 310°C and greater than 260°C, more preferably comprised between 270°C and 300°C, still more preferably comprised between 280°C and 290°C.

Preferably the semi-aromatic polyamide has a glass transition temperature Tg comprised between 90°C and 150°C, still more preferably comprised between 100°C and 140°C.

Preferably the semi-aromatic polyamide has a melting temperature Tm less than 310°C or 305°C, more preferably less than 300°C, still more preferably less than 290°C and a glass transition temperature Tg comprised between 90°C and 150°C, still more preferably comprised between 100°C and 140°C.

In one embodiment the semi-aromatic polyamide has a melting temperature Tm less than 305°C, and a glass transition temperature Tg of at least 90°C.

In one embodiment, the semi-aromatic polyamide has a melting temperature Tm less than 300°C and a glass transition temperature Tg comprised between 100°C and 140°C.

In one embodiment the semi-aromatic polyamide has a melting temperature Tm less than 290°C and a glass transition temperature Tg comprised between 100°C and 140°C.

The combination of optimal values of Tm and Tg of the semi-aromatic polyamide allows melt extruding the material without thermally damaging it, maximising the mechanical properties with the process of extrusion and stretching and maintaining them when it is incorporated in the tyre at all use temperatures of the same. Advantageously a semi-aromatic polyamide with the above-reported thermal properties can be processed in conventional plants, hence without using lines dedicated to the extrusion of polymers with particularly high melting points.

The partial thermal degradation that known high-melting-point semi-aromatic polyamides can encounter, such as for example those described in WO20151 07024, when subjected to melt extrusion can negatively affect the tenacity of the yarn, as is observed by the reduced tenacity value at breakage (BT cN/tex) for the polyamide PPA1 in the present experimental part (Tables 4A and 4B).

The semi-aromatic polyamide preferably has a relative viscosity (RV) of at least 1.75.

Preferably the relative viscosity of the semi-aromatic polyamide is comprised between 1.75 and 2.2.

The relative viscosity (RV) is measured according to the method ISO 307, fifth edition (1 gram in 100 ml of 96% sulfuric acid at 25°C). The relative viscosity is the ratio between the viscosity of the specimen in 96% sulfuric acid and the viscosity of the sulfuric acid itself.

The Applicant has found that semi-aromatic polyamides with viscosity values of the polymer in these intervals can be spun without particular difficulties, while problems regarding processability can be encountered for higher viscosities, such as the undesired increase of pressure and temperature within the extruder, with consequent degradation of the polymer or, for lower viscosities, regarding extrusion of the filaments.

The production of reinforcing elements for tyres, characterized by high tenacity (at least 30 cN/tex, preferably at least 40cN/tex), require the use of polymers preferably with high molecular weight (e.g. equal to 30000g/mole) and consequently high viscosity.

In one embodiment, the semi-aromatic polyamide has a melting temperature Tm less than 305°C, a glass transition temperature Tg of at least 90°C and a relative viscosity comprised between 1.75 and 2.2.

In one embodiment the semi-aromatic polyamide has a melting temperature Tm less than 300°C and a glass transition temperature Tg comprised between 90°C and 140°C and a relative viscosity comprised between 1.75 and 2.2.

The semi-aromatic polyamides with respect to the aliphatic polyamides PA6,6 and PA4,6 provide yarns with bimodal tensile modulus, a higher force at break, lower heat shrinking, lower absorption of water, improved chemical resistance and a dynamic modulus that is practically constant between 25 and 130°C.

Examples of suitable semi-aromatic polyamides are PA4T, PA6T, PA8T, PA9T, PA10T, preferably their copolymers such as PA 6I/6T and PA10T/6T.

Examples of preferred semi-aromatic polyamides are those described in the patent applications WO2018073290, WO2014118277 and WO2014118278 in the name of DSM.

Producers of suitable semi-aromatic polyamides are for example DuPont, BP, EMS Grivory, Mitsui, Solvay, Evonik, DSM and Arkema.

An example of a preferred semi-aromatic polyamide is the PPA2 described in the present experimental part.

In one embodiment of the elongated reinforcing element, said one or more polymeric threads are entirely constituted by at least one semi-aromatic polyamide as previously defined (non-hybrid elongated reinforcing element).

In one embodiment said one or more polymeric threads of said elongated reinforcing element are entirely constituted by a same semi-aromatic polyamide as previously defined.

The reinforcing element for tyres according to the invention can comprise two or more semi-aromatic polyamides as previously defined, different from each other, in mixture in the same thread or incorporated in different threads.

In one embodiment the two or more semi-aromatic polyamides as previously defined are separately extruded to give distinct threads, then incorporated in the same elongated reinforcing element. Preferably the threads of the two or more semi-aromatic polyamides are mixed together by means of interlacing technique. Alternatively, the two or more semi-aromatic polyamides as previously defined can be co-extruded in a same polymeric thread (mixtures of co-extruded semi-aromatic polyamides). Advantageously by suitably mixing multiple semi-aromatic polyamides it is possible to improve, for example, the viscosity of the polyamide composition in order to have an easier hot extrusion.

In the case of hybrid elongated reinforcing element, one or more polymeric threads entirely attained with at least one semi-aromatic polyamide can be coupled with one or more other polymeric threads attained with different materials, in the same end or in different ends.

Alternatively, in a hybrid elongated reinforcing element, at least one semi-aromatic polyamide as previously defined can be co-extruded in at least one polymeric thread with different polymers (mixtures of polymers).

Said different materials include polymers such as aromatic polyamides (e.g. Aramid), aliphatic polyamides (e.g. Nylon 6, Nylon 6.6, Nylon 4.6, Nylon 4.10, Nylon 10.10, Nylon 11, Nylon 12, Nylon 6.10, Nylon 6.12), polyesters (e.g. polybutylene terephthalate, polyethylene terephthalate, polyethylene isophthalate, polyethylene naphthalate PEN), polyketones, polyvinylalcohol, cellulose (e.g. rayon, lyocell) and other materials such as glass fibres or carbon fibres, and mixtures thereof. Depending on the nature and on the quantity of said different polymers, it will be possible to suitably modulate the properties of the reinforcing element in order to better adapt it to the specific application requirement.

In one embodiment the reinforcing element comprises only one end.

In one embodiment the reinforcing element comprises a first end and a second end roped together.

In one embodiment the reinforcing element comprises at least three ends roped together.

In one embodiment all the ends are made entirely of filaments of at least one semi-aromatic polyamide having melting temperature Tm preferably less than 310°C and a Tg of at least 90°C.

The reinforcing element of the invention can comprise polymeric threads coupled in ends with different twisting.

The reinforcing elements or textile cords are identified with a numerical label which represents the thread count of the fibre used, the number of the ends that contribute to forming the reinforcing element, the twists and the winding senses of the single ends, the twists and the total winding sense of the final element.

In the scope of the present description, with the expressions (38x38), (25x25) and generally (nxn), the first number indicates the twists imparted to the yarn or set of yarns or to the end and the second number indicates the twists imparted to the cord after having coupled the ends, expressed in twists per decimetre (dm).

Preferably the twisting imparted respectively to each end and to the set of the ends that form the cord is between 20 and 55 twists per decimetre, equivalent to 200 TPM - 550 TPM (Twist Per Metre).

One example of a numerical identification label for a reinforcing cord can be PPA 1400 x2 (35x35) Z/S.

The thread count or linear density of the yarn can be expressed in dtex, i.e. mass expressed in grams of a thread of 10000 m length.

Preferably the thread count of the present elongated reinforcing element is comprised between 900 dtex and 12000 dtex. Preferably the thread count of the elongated reinforcing elements is comprised between 940/1 dtex and 2100/3 dtex, where the terms /1, or /3 represent the number of ends of the yarn twisted together in each structure.

Preferably the thread count of the elongated reinforcing elements is comprised between 1400/2 dtex and 1880/3 dtex.

Preferably the thread counts in dtex of the elongated reinforcing elements of the invention can be 940/1, 940/2, 1400/1, 1400/2, 1880/1, 1880/2, 1880/3, 2100/1, 2100/2, 2100/3.

Preferably the ends made of semi-aromatic polyamide for attaining the elongated reinforcing elements according to the invention can be prepared by coupling yarns having different thread counts in order to form ends which are then twisted on their own or together with other ends.

According to such setting, for example, it is possible to make one end by coupling two yarns having respectively thread count 1400 dtex and 2100 dtex, obtaining an end with thread count 3500x1 dtex and then construct a cord for example with two twisted ends with thread count 3500x2 dtex.

Naturally, the man skilled in the art, for the purpose of the invention, will know how to select the number and thread count of the yarns, degree of twisting and density from among the above variables in order to build a tyre component suitable for the final application.

The reinforcing elements according to the invention are characterized by a tenacity of at least 30 cN/tex, in particular by a tenacity preferably of at least 35cN/tex, more preferably of at least 40 cN/tex, still more preferably of at least 45 cN/tex, according to Bisfa 2002.

The reinforcing elements according to the invention are characterized by a tensile modulus expressed in N at one or more defined elongations (%), of at least 20 N at 5.3% elongation and of at least 40 N at 9.5% elongation, preferably by a tensile modulus of at least 25 N at 5.3% elongation and at least 45 N at 9.5% elongation. Tenacities and tensile moduli are measured according to the Bisfa method (Test methods for para-aramid fibre yarns 2002 edition).

Preferably the yarn of the invention has a dynamic modulus measured by DMA according to the standard ASTM D5026 of at least 23000 N/m, more preferably of at least 25000 N/m at ambient temperature.

Preferably, the yarn of the invention has a dynamic modulus measured by DMA according to the standard ASTM D5026 of at least 22000 N/m, more preferably of at least 23500 N/m at the temperature of 130°C.

Preferably the reinforcing element of the invention has a variation of the dynamic modulus, measured at the temperature of 25°C and at the temperature of 130°C according to the standard ASTM D5026, less than 15%, more preferably less than 10%, still more preferably less than 5%.

Advantageously the reinforcing element according to the invention has an improved fatigue strength with respect to the elongated reinforcing elements made of aramid. If cords are desired with particularly high tenacity and modulus, the man skilled in the art is capable of suitably modifying the steps of extrusion and stretching of the polymers and their subsequent conversion into elongated reinforcing element upon reaching such requirements.

By suitably modulating the total stretching ratio, the linear density, the dimensions, the number of threads in the ends, the number and the twists of the ends in the elongated reinforcing elements, it is possible to reach the tenacity values desired for the specific application type.

The Applicant deems that the reinforcing elements of the invention can be used in the tyres of all types of vehicles but in particular where high performances are required, hence not only in sport/race cars but also for example in sport/racing motorcycles.

The reinforcing elements of the invention can be used in the carcass structure and in the belt structure of the tyre (in both or only in one of the aforesaid structures) or in other reinforcing components of the tyre, such as for example in the reinforcing components of the tyre indicated as "flippers" and "chafers", as well as in place of the metallic cords and in place of the conventional textile cords.

The production of the reinforcing element of the invention generally comprises a step of preparation of the polymeric thread followed by the coupling and twisting of the yarns, by a possible subsequent weaving, generally followed by treatment of making adhesive and rubber-covering.

The polymeric thread, comprising at least one semi-aromatic polyamide as defined above, is produced via extrusion generally followed by a stretching step.

Different spinning methods exist, such as for example melt spinning, dry spinning, solution spinning or gel spinning.

The selection from among the various technologies is carried out first of all in consideration of the nature and on the properties of the polymer that it is desired to extrude.

In the melt spinning, the polymer is melted, then spun through an orifice or a perforated plate, from which it exits and solidifies while it is stretched by a system of rollers or pulleys. The nylon and the materials with low melting point are typically melt yarns.

The solution spinning is instead used for those polymers which have a very high melting temperature, close to or greater than that of degradation such as for example the aramids which melt around 500°C. Typically the aramids are hard to process via melting since they do not soften and do not melt if not at temperatures at which they decompose. It is therefore necessary to spin them from solution with processes made more complicated, also due to the fact that there are few solvents capable of significantly dissolving them. In these spinning types, the polymer is dissolved in a suitable solvent and the solution subjected to spinning with moving the solvent away by means of a jet of air or inert gas or by dissolution in a second solvent in which the polymer is not soluble, obtaining the solidification of the thread.

In gel spinning, also employed for the aramids, the partially melted polymer is first hit by an air flow and then cooled in a liquid bath.

Preferably the present semi-aromatic polyamides are melt spun. Advantageously, above all when characterized by Tm less than 310°C, they do not encounter degradation, unlike what can happen instead with polyamides with higher melting points.

In the process for the production of the polymeric thread of the elongated reinforcing element according to the invention the polyamide composition comprising said semi-aromatic polyamide is subjected to steps a) to d) as previously defined, including the extrusion of the composition (steps a - c) and a subsequent stretching step d). The starting polyamide composition comprises at least one semi-aromatic polyamide characterized by a glass transition temperature (Tg) and by a melting temperature (Tm).

In the process for producing yarns via melting, the polyamide composition is typically introduced within a screw extruder with a temperature profile comprised between Tm and Tm+15°C, at a pressure for example of about 35 bar, with a stay time of several minutes.

In these conditions, the degradation of the polymer chains is prevented, which would have a negative impact on the characteristics of modulus and tenacity required for application in tyres. Advantageously, by using semi-aromatic polyamides with Tm less than 310°C, preferably with Tm less than 300°C, the possible thermal damage is even more reduced, entirely to the advantage of the yarn tenacity.

During the extrusion, the melted material is drawn, wound on rollers, preferably under tension, and cooled. From the winding speed and from the cooling T, the magnitude of the crystallisation depends, and consequently also the stretchability of the thread. Preferably, one proceeds with a quick cooling in order to prevent the development of crystallisation as much as possible.

Depending on the speed applied during winding, the chains of the polymer can already encounter a more or less marked stretching.

If the winding of the thread from the spindle occurs at rather low speeds, for example in the interval from 200 m/min. to 2000 m/min., after the cooling from the melting, the level of molecular orientation in the fibre will be poor, like its level of crystallinity. In such case, downstream of the spinning process, the fibre will have to be stretched in a specific stretching step d).

If instead the winding of the thread from the spindle occurs at high speed, for example in the interval from 3000 m/min. to 15000 m/min., a "neck" is formed in the spindle which leads to a high local level of orientation, triggering the crystallisation process. In such case, the stretching can already occur in the winding step itself, as well as, optionally, also in the subsequent stretching step d).

Downstream of the extrusion process, the fibre is preferably stretched in a single-axis manner with temperature typically between the glass transition temperature (Tg) and the melting temperature (Tm) of the polymeric thread. The object of the stretching step e) is that of orienting the polymer chains and maximising the mechanical characteristics of the thread in longitudinal direction.

Indeed the stretching renders the yarn anisotropic, with specific properties, such as the mechanical strength, improved in the direction of single-axis stretching.

This stretching can be executed in a multiple mode with stretching temperatures typically increasing for each step of the stretching in the temperature interval between Tg and Tm. The development of the crystallisation is generally verified already during these first stretching steps and can hinder a further stretching. Therefore, in the process according to the present invention, preferably the sequence of stretching temperature is such to minimise the crystallisation of the polymer.

After the stretching, a further heat relaxation (heat-setting) passage is applied to the fibre, at a T just below the Tm with the fibre in mechanically constrained conditions or in conditions in which the fibre can be shrunk by a small percentage in direction of the length. It is during this passage that a high level of crystallisation is obtained. The stretching can be executed in a single step or in multiple steps.

In a method with multiple stretching steps, a first stretching is suitably executed at a temperature Ts1 around the Tg of the polyamide composition, preferably within an interval of the Tg from - 20°C to + 20°C.

A second stretching step is executed at a temperature Ts2 comprised in the interval from Ts1 +20°C to Ts1 +100°C but less than Tm.

A possible third stretching passage is executed at a temperature Ts3 in the interval from Ts2 +20°C to Ts2 +100°C but less than Tm.

In a single stretching step, the stretching is executed at a temperature between Tg and Tm, typically between 140°C and 200°C, preferably at a temperature between Tg and Tg +60°C, more preferably are at temperature between Tg and Tg +40°C.

After the stretching steps, the fibre is preferably subjected to a step of heat-setting. Here, the fibre is heated in conditions completely constrained or allowing a certain geometric relaxation at a temperature between the temperature of the last stretching step and Tm. Preferably this temperature is in the interval between Tm - 30°C and Tm, more preferably at a temperature between Tm - 15°C and Tm, and subsequently the fibre is cooled below the Tg. The duration of the heat-setting step is suitably comprised between 0.5 and 30 seconds or even for a longer time, e.g. between 5 and 20 seconds.

Generally for relaxation time greater than 30 seconds, further significant improvements are not observed.

The heat-setting step advantageously allows maintaining the physical properties and the dimensions of the fibres when heated once again at a temperature greater than the Tg.

In the present process, the total stretching ratio of the yarn is generally at least 2.7:1 , preferably at least 2.9:1, more preferably at least 3:1, still more preferably at least 3.1 :1, 3.3:1, 3.4:1, 3.5:1 or 4:1.

The total stretching ratio of the yarn is generally not beyond 6:1, preferably not beyond 5:1 or 4.5:1.

The Applicant has found that the particular bimodal trend of the tensile modulus of the present stretched yarns is affected not just by the Tg of the semi-aromatic polyamide, but also by the total stretching ratio and has observed that typically it is manifested for values of total stretching ratio of at least 2.9:1.

Depending on the preselected polyamide, in particular its Tg, the man skilled in the art is capable of identifying the minimum total stretching ratio at which such advantageous bimodal trend of the tensile modulus of the reinforcing element starts to appear, acquiring the tenacity suitable for the particularly demanding performances of the application in tyres.

Preferably the process for the production of the polymeric thread comprises one or more of the following steps:
a) providing a polyamide composition comprising at least one semi-aromatic polyamide having melting temperature Tm preferably less than 310°C, more preferably less than 300°C, and a Tg preferably of at least 110°C, more preferably of at least 120°C,
b) melting said polyamide composition at a temperature not greater than the Tm, to give a melted polyamide composition,
c) extruding the melted polyamide composition to give a polymeric thread, cooling and winding said thread at a speed comprised between 200 and 2000 m/min., preferably between 400 and 1000 m/min., more preferably between 600 and 800 m/min.,
d) stretching the polymeric thread at a temperature preferably comprised between 140°C and 200°C and with total stretching ratio preferably from 2.9:1 to 5:1, more preferably from 3:1, to 4:1,
e) allowing the constrained stretched polymeric thread to relax.

Preferably the final polymeric thread prepared according to the present process allows attaining the reinforcing element of tyres of the invention with a tenacity of at least 30 cN/tex, more preferably at least 40 cN/tex, still more preferably of at least 45 cN/tex, ideal for the demanding applications of the specific application sector.

The polyamide composition intended for the extrusion comprises preferably at least 80%, more preferably at least 90%, still more preferably at least 95% by weight of at least one semi-aromatic polyamide as previously defined.

In a preferred embodiment, the polyamide composition intended for the extrusion comprises preferably at least 80%, more preferably at least 90%, still more preferably at least 95% by weight of at least one PPA with Tg greater than 120°C and Tm lower than 300°C. Said composition is preferably stretched with stretching ratio from 3:1 to 4:1.

In a preferred embodiment of the present process, selecting a PPA with Tg greater than 120°C and Tm less than 295°C, by suitably setting the winding speed at values comprised between 600 m/min. and 800 m/min. one is able to induce an optimal crystallinity for the subsequent stretching step with high stretch ratios (e.g. of at least 3.5:1).

The polyamide composition can comprise also other thermoplastic polymers different from the semi-aromatic polyamide, e.g. aliphatic polyamides, polyphenylene sulphide (PPS), liquid crystal polymers (LCP), aramid resin, polyether ketone (PEEK), polyether imide (PEI), polyimide (PI) and optionally compatibilising agents.

Preferably, the quantity of one or more other thermoplastic polymers in the polyamide composition generally does not exceed 20% by weight. Preferably such quantity is comprised between 0 and 10% by weight, still more preferably between 0 and 5% by weight with respect to the total weight of the composition.

The polyamide composition and the stretched polymeric thread obtained therefrom can comprise one or more additives selected from among reinforcing fibrous materials, nanoparticles, inorganic fillers, flame retardants and auxiliary additives, such as thermal stabilisers, impact modifiers, dyes, pigments, plasticising agents and process aids such as nucleating agents, antiblocking agents, separating agents and antislip agents.

The auxiliary additives are optionally present in an overall total quantity not greater than the 10% by weight, preferably comprised between 0 and 5 % by weight, more preferably between 0 and 2.5 % by weight.

In one embodiment the polyamide composition comprises up to 98% of at least one PPA as defined herein and anti-oxidising agents up to a maximum of 2% by weight. Preferably the polyamide composition is dried before the extrusion by means of oven drying.

In the step b) of the present process the polyamide composition is heated at a temperature preferably not greater than the Tm of the semi-aromatic polyamide +15°C, more preferably at a temperature equal to the Tm, supplying the melted polymer that - once passed through a die - provides the polymeric thread (step c). During the process of melt extrusion, the man skilled in the art is capable of suitably modifying the temperatures applied and/or the stay times of the polymer in the extruder in order to minimise the decomposition of the semi-aromatic polyamide in the thread.

Preferably the stay time of the semi-aromatic polyamide in the extruder is less than 2 minutes, more preferably less than 1 minute.

Preferably in the present process the stretching of the thread mainly occurs in step d), by operating the winding after drawing at moderate speeds and thus controlling the initial crystallisation, before then proceeding with one or more subsequent stretching steps, as previously described.

Finally, it is possible to carry out one or more steps of heat-setting downstream of the process for preparing the thread (step e).

The polymeric threads thus obtained can be wound in a reel and subsequently coupled and twisted to give the yarns used in building the elements and reinforcing fabrics of the present invention according to conventional methods.

In the subsequent conversion step, each yarn and end can then be subjected to twisting on itself according to conventional techniques, thus being able to provide the reinforcing element of the invention.

In one embodiment the yarn is not twisted.

In a preferred embodiment the yarn is twisted.

The twisting of the yarn can range from about 50 tpm (twists per metre) to about 600 tpm, more preferably from about 100 tpm to about 300 tpm.

The twisting of the yarn can allow preventing possible problems that can arise during the further treatments of the same (e.g. treatments for improving the adhesion of the rubber, rubber-covering processes etc.), as well as for adjusting its point of transition according to its final application.

In one embodiment, two or more already-twisted ends are coupled and further twisted together to give the reinforcing element or elongated reinforcing element of the invention.

In the reinforcing element, the ends can have levels of twisting that are equal to or different from each other.

In the hybrid reinforcing element, the ends can have levels of twisting that are equal to or different from each other, preferably different in order to better balance the properties of the final reinforcing element and allow aimed or wider applications.

Once attained, the elongated reinforcing element of the invention can be used as is in the tyre, upon making adhesive and rubber-covering, such as for example in the example of zero degree strip-like element, in which it is applied as a single elongated reinforcing element, or it can be a fabric to give plies.

A further aspect of the present invention is a reinforcing fabric comprising at least one elongated reinforcing element according to the invention as previously defined. In one embodiment the fabric comprises at least one elongated reinforcing element according to the invention in the warp or in the weft.

In one embodiment the fabric comprises at least one elongated reinforcing element according to the invention in the warp and at least one elongated reinforcing element according to the invention in the weft.

In one embodiment the fabric is entirely constituted by elongated reinforcing elements according to the invention.

In one embodiment the fabric comprises at least one elongated reinforcing element according to the invention in the warp, while the weft is constituted by elongated reinforcing elements made of different materials.

In one embodiment the fabric comprises elongated reinforcing elements according to the invention in the weft while the warp comprises elongated reinforcing elements made of different materials.

In hybrid fabrics, it is possible to use elongated reinforcing elements made of different materials.

In a preferred embodiment, the reinforcing fabric is a structure or carcass ply.

The number of reinforcing elements in the carcass ply arranged per decimetre (also termed density), measured along a circumferential direction, is generally comprised between 60 cords/dm and 130 cords/dm, between about 80 and about 120, preferably between about 97 and about 110.

The density of the elongated reinforcing textile elements in the fabric is typically expressed with the label F followed by the number of cords arranged per decimetre. The elongated reinforcing elements and the reinforcing fabrics according to the invention are preferably incorporated in a cross-linkable elastomeric composition (rubber-covering step) according to well-known techniques. Normally, said elastomeric composition comprises elastomeric polymers, as well as other additives such as, for example, fillers (for example carbon black, silica), vulcanisation agents (e.g. sulphur), activating, accelerants, plasticising agents used in the tyre industry. Examples of elastomeric polymers which can be advantageously used are: natural rubber (NR), epoxidised natural rubber (ENR); butadiene, isoprene or 2-chlorobutadiene homopolymers and copolymers such as, for example, polybutadiene (BR), polyisoprene (IR), styrene-butadiene (SBR), nitrile-butadiene (NBR), polychloroprene (CR); butyl rubbers (IIR), halogenated butyl rubbers (XIIR); ethylene/propylene copolymers (EPM); non-conjugated ethylene/propylene/diene terpolymers (such as, for example, norbornene, cyclooctadiene or dicyclopentadiene (EPDM); or mixtures thereof.

The man skilled in the art will be capable of determining which elastomeric polymers, as well as which additives, are better to use, as a function of the characteristics of the final manufactured product that one wishes to obtain.

Before the rubber-covering, the reinforcing element or the reinforcing fabric are preferably treated with an adhesive in order to render them more compatible with the elastomeric material according to known techniques.

Typically the adhesive comprises resorcinol, formaldehyde and latex but can equally use any type of adhesive suitable for compatibilising the reinforcing element or the fabric.

Advantageously, the elongated reinforcing element comprising semi-aromatic polyamides according to the invention acquires optimal adhesive properties already with only one single conventional bath for making adhesive, analogous to the aliphatic polyamides and unlike the aromatic polyamides which require multiple treatments.

Typically, the adhesive is applied via immersion (dipping) or via spraying, but it is possible to apply it also according to other suitable known techniques.

The reinforcing element or the reinforcing fabric can be superficially treated by immersing them in a solution containing said mixture of resorcinol-formaldehyde resin and rubber latex (this mixture being commonly indicated with the expression "resorcinol-formaldehyde latex RFL"), and subsequently subjected to drying. The latex used can be selected, for example, between: vinylpyridine/styrene-butadiene (VP/SBR), styrene-butadiene (SBR), latex of natural rubber (NR), carboxylated and hydrogenated acrylonitrile-butadiene (X-HNBR), hydrogenated acrylonitrile (HNBR), acrylonitrile (NBR), ethylene-propylene-diene (EPDM), chlorosulfonated polyethylene (CSM) or a mixture thereof.

Generally after the application of the adhesive, one proceeds with the drying by the solvent, typically water, to a temperature around 180°C, with a second step of heating around 235°C - 240°C, in order to partially cross-link the adhesive, and with a final step of relaxation of the material at temperatures slightly lower (e.g. 230°C), slightly reducing the stretch ratios.

A further aspect of the present invention is represented by a tyre component comprising at least one elongated reinforcing element or a reinforcing fabric according to the invention and at least one elastomeric compound for tyres.

Preferably the tyre component according to the invention is selected from among carcass structure, belt structure, additional belt layer, rubber coating layer, sidewall and bead reinforcing layers (flipper and chafer), more preferably it is a carcass structure.

According to a preferred embodiment, said tyre component is an additional belt layer. Said additional belt layer is commonly known as "zero degree belt".

In one embodiment at least one bead reinforcing layer can be associated with the carcass layer at or in proximity to a respective anchoring structure.

Preferably, said at least one bead reinforcing layer comprises at least one elongated reinforcing element according to the invention.

Said at least one bead reinforcing layer can be interposed between a respective turned-up end flap of said at least one carcass layer and a respective anchorage structure.

More preferably, said at least one bead reinforcing layer can at least partially surround said anchorage structure or bead. Such bead reinforcing layer is also indicated with the term "flipper".

A carcass reinforcing layer can be associated with the respective turned-up end flap with the respective end flap of the at least one carcass layer in a more axially external position with respect to the respective annular anchorages structure. More preferably, said at least one carcass reinforcing layer can be extended from said carcass structure along the sidewall towards the tread band. Such carcass reinforcing layer is also indicated with the term "chafer".

In one embodiment said tyre component comprises at least one elongated reinforcing element or reinforcing fabric comprising at least one semi-aromatic polyamide, having a Tg of at least 90°C and melting temperature Tm preferably less than 310°C, and at least one elongated reinforcing element or supplementary reinforcing fabric made of conventional textile material such as for example nylon, rayon, polyethylene terephthalate, preferably nylon, or of metal, preferably steel.

In one embodiment, said tyre component comprises at least one elongated reinforcing element comprising at least one semi-aromatic polyamide having a Tg of at least 90°C and melting temperature Tm preferably less than 310°C according to the invention, and at least one supplementary elongated reinforcing element made of conventional textile material such as for example nylon, rayon, polyethylene terephthalate, preferably nylon, or of metal, preferably steel, said at least one elongated reinforcing element according to the invention and said at least one supplementary elongated reinforcing element being twisted together.

Said reinforcing elements can be arranged along the transverse direction of the component according to different arrangements.

For example, said reinforcing elements can be arranged in an alternated sequence, such as: an elongated reinforcing element according to the present invention comprising at least one semi-aromatic polyamide having a Tg of at least 90° C and melting temperature Tm preferably less than 310°C, a supplementary elongated reinforcing element made of metal or textile material, i.e. a 1:1 sequence. Alternatively, said alternated sequence can be the following: two reinforcing elements according to the present invention, a supplementary elongated reinforcing element made of metal textile material, i.e. a sequence 2:1.

A further aspect of the present invention is represented by a tyre for vehicle wheels comprising at least one tyre component according to the invention.

More particularly, the present invention preferably refers to a high performance tyre such as for example a tyre designed for cars with high power, or more generally a tyre intended for applications that involve high operating speeds and/or extreme driving conditions.

In more detail, the present invention preferably refers to a high performance tyre (HP) or very high performance tyre (UHP).

Preferably, the tyre according to the present invention is suitable for "HP" (high performance) or "UHP" (very high performance) tyres, i.e. tyres capable of sustaining a maximum speed of at least 210 km/h, preferably greater than 240 km/h, still more preferably greater than 270 km/h, like for a tyre suitable for being used in sport/race contests such as car races on racetracks.

Examples of said tyres are those belonging to the classes "H", "V", "W", "Y", "Z", or "ZR" according to the standard E.T.R.T.O. - (The European Tyre and Rim Technical Organisation) and the race tyres, in particular for high-powered four-wheel vehicles. Typically, the tyres belonging to such classes have section width equal to or greater than 185 mm, preferably comprised between 195 mm and 385 mm, more preferably comprised between 195 mm and 355 mm. Such tyres are preferably mounted on rims having fitting diameters equal to or greater than 13 inches, preferably not greater than 24 inches, more preferably comprised between 16 inches and 23 inches.

In addition, preferably the present invention refers to a tyre for SUV vehicles (Sport Utility Vehicle) i.e. a particular category of motor vehicles with raised configuration and usually with integral traction.

The Applicant also deems that the above-described reinforcing elements can be used in the tyres of all types of vehicles where high performances are required, hence not only in sport/race cars but also for example in sport/racing motorcycles. In the tyre according to the invention, the present reinforcing elements can be used in the carcass structure, as well as in the cross belt structure and in one or both flipper and chafer components (if provided), or only in one or both flipper and chafer components, in the event that a cross belt structure is not provided in the tyre, or a belt structure is provided comprising only reinforcing elements different from those of the invention.

The carcass structure is intended to confer the desired characteristics of integrity and structural strength to the tyre, while the belt structure is also intended to transfer to the carcass structure the lateral and longitudinal stresses to which the tyre is subjected while traveling, following contact with the road surface, so as to impart thereto the desired performances of adherence, driving stability, controllability, directionality, road grip and comfort. The zero degree reinforcing layer, when present, is instead intended to limit the radial elongation of the belt structure.

In the tyres for vehicle wheels, it is the carcass structure that must structurally support most of the stresses that are transmitted by the road surface to the wheel and vice versa, hence the response of the carcass structure to such stresses conditions the overall behaviour of the tyre.

In the carcass structure, a plurality of reinforcing elements according to the invention are thus provided which have the function of conferring structure the properties of structural strength and rigidity to the carcass.

In one embodiment according to the present invention, the tyre for vehicles comprises at least
- a carcass structure comprising at least one carcass layer having opposite lateral edges associated with respective bead structures;
- a pair of sidewalls respectively applied on the lateral surfaces of the carcass structure in axially outer position;
- a belt structure applied in radially outer position to the carcass structure;
- a tread band applied in radially outer position to said belt structure,
in which at least one component comprises at least one elongated reinforcing element or one reinforcing fabric according to the invention.

Preferably, said component is the carcass structure comprising a plurality of reinforcing elements according to the invention.

Preferably, said carcass structure is a radial carcass structure.

Preferably, the plurality of reinforcing elements is incorporated in two carcass plies radially superimposed on each other.

Preferably, the carcass structure comprises opposite turned-up end flaps around respective anchoring annular structures to define, on opposite sides with respect to an equatorial plane of the tyre, respective bead structures; the plurality of reinforcing elements being incorporated in said two carcass plies.

Preferably, the belt structure comprises at least one elongated reinforcing element wound on the carcass structure according to a substantially circumferential winding direction.

In one embodiment, the tyre comprises:
- a carcass structure with substantially toroidal shape, having opposite lateral edges that terminate in respective bead structures;
- a belt structure applied in radially outer position with respect to said carcass structure, said belt structure comprising:
   - at least two belt layers including a plurality of reinforcing elements which are parallel to each other in each layer and are intersected with respect to the adjacent layer, said reinforcing elements lying in a manner so as to form a predetermined angle with respect to a circumferential direction,
   - at least one additional belt layer applied in radially outer position with respect to said at least two belt layers, including a plurality of reinforcing elements, said reinforcing elements being helically wound to form coils stretched in a substantially circumferential direction of the tyre (zero degree belt);
- a tread band applied in radially outer position with respect to said supplementary belt structure;
- a pair of sidewalls laterally applied on opposite sides with respect to said carcass structure.

In this embodiment, the carcass structure and/or the belt structure can comprise one or more reinforcing elements according to the invention.

### DESCRIPTION OF A TYRE ACCORDING TO THE INVENTION

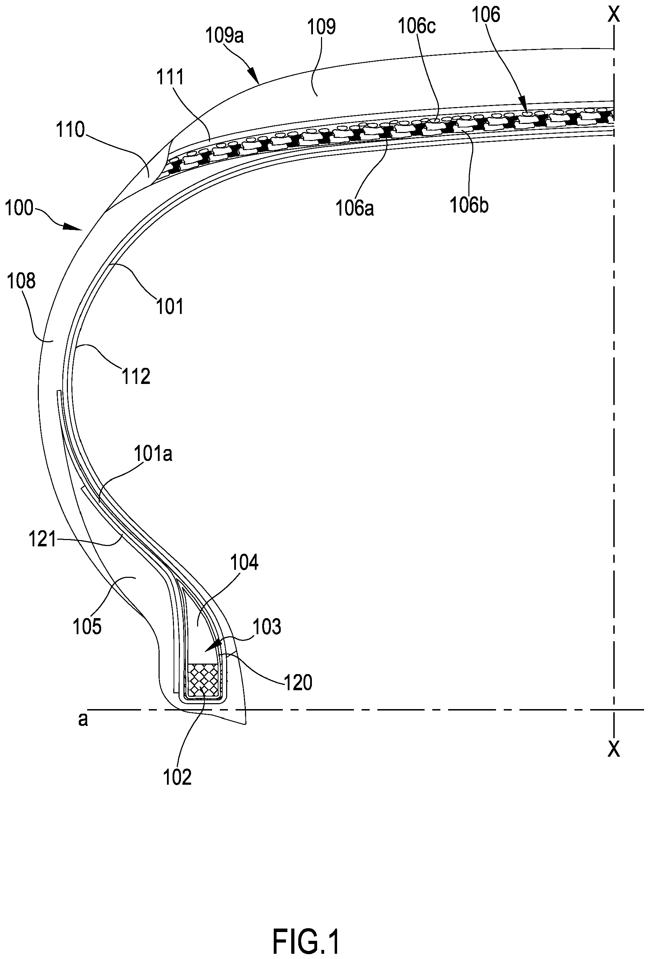

With reference to figure 1, the following definitions are given:
- "equatorial plane" (X-X) is the plane perpendicular to the rotation axis of the tyre and containing the axial centre line of the tyre;
- "section ratio" is the ratio of the height in cross section of the tyre, i.e. the radial distance from the nominal diameter to the outer diameter of the tyre at its equatorial plane, divided by the width of the maximum cross section of the tyre, i.e. the maximum linear distance parallel to the rotation axis of the tyre between the outer surfaces of the sidewalls (the above dimensions were determined according to the standard E.T.R.T.O.).

The tyre 100 comprises at least one carcass structure, in turn comprising at least one layer or carcass ply 101.

The opposite lateral edges of the at least one carcass ply are associated with respective anchorage structures (103) termed beads, each comprising at least one bead core (102) and at least one bead filler (104) and intended to allow the anchorage of the tyre 100 on a corresponding mounting rim, not illustrated.

The association between the carcass structure and the bead core (102) is attained herein by turning up the opposite lateral edges of the carcass ply (101) around the bead core (102) so as to form a so-called carcass turn-up (101a), as represented in figure 1.

In one embodiment, the coupling between carcass structure and anchorage structure (103) can be attained by means of a second carcass layer (not represented in Figure 1) applied in an axially outer position with respect to the carcass ply (101). The at least one carcass ply (101) generally comprises a plurality of elongated reinforcing elements (indicated herein also as "reinforcing cords") arranged parallel to each other and at least partially covered by a cross-linked elastomeric composition. These reinforcing cords can be made of textile fibres, for example rayon, nylon or polyethylene terephthalate; or in steel threads weaved together, said steel threads being covered with a metallic alloy (e.g. alloys of copper/zinc, zinc/manganese, zinc/molybdenum/cobalt, and the like).

In one embodiment these elongated reinforcing elements are in accordance with the present invention.

The carcass structure is usually of radial type, i.e. it incorporates reinforcing cords arranged in a direction substantially perpendicular with respect to a circumferential direction.

An antiabrasive strip (105) optionally attained with elastomeric compound is arranged in an external position of each anchorage structure (103).

A belt structure (106) is applied in radially outer position with respect to the carcass structure. In the particular embodiment of figure 1, the belt structure (106) comprises:
- two belt layers (106a, 106b) including a plurality of reinforcing cords which are parallel to each other in each layer and intersecting with respect to the adjacent layer, said reinforcing cords lying so as to form a predetermined angle with respect to the circumferential direction;
- an additional belt layer (106c) applied in radially outer position with respect to said two belt layers (106a, 106b) including a plurality of reinforcing cords, said reinforcing cords being helically wound to form coils lying in a substantially circumferential direction of the tyre.

Usually, the reinforcing cords of said two belt layers (106a, 106b) can be made of metal (i.e. they are metallic cords).

As specified above, said reinforcing cords are parallel to each other in each belt layer (106a, 106b) and intersect each other with respect to the adjacent belt layer, preferably tilted in a symmetric manner with respect to the equatorial plane (X-X) of the tyre (100) according to an angle comprised between about 10° and about 45°, preferably between about 12° and about 40°, and covered with a cross-linked elastomeric composition.

As already stated above, the additional belt layer (106c) is commonly known as "zero degree belt" strip-like element. Preferably, the reinforcing cords of said "zero degree belt" are arranged according to an angle comprised between 0° and about 5° with respect to the equatorial plane (XX) of said tyre (100).

Preferably, the reinforcing cords of said "zero degree belt" (106c) are entirely attained according to the present invention.

Alternatively, the reinforcing cords of said "zero degree belt" (106c) comprise at least one reinforcing cord according to the invention and at least one reinforcing cord in a conventional textile material such as, for example, nylon, rayon, polyethylene terephthalate, preferably nylon.

Alternatively, the reinforcing cords of said "zero degree belt" (106c) comprise at least one reinforcing cord according to the invention and at least one reinforcing cord made of metal, preferably steel, more preferably at least one steel cord.

When steel cords are present, preferably said steel cords are steel threads covered with a metal alloy (e.g. alloys of copper/zinc, zinc/manganese, zinc/molybdenum/cobalt, and the like).

Said reinforcing cords can be arranged along the transverse direction of the "zero degree belt" (106c) according to a different arrangement.

Said "zero degree belt" (106c) can be obtained by helically winding at least one elongated reinforcing element of the invention around said two belt layers (106a, 106b).

Alternatively, said "zero degree belt" (106c) can be obtained by helically winding a rubber-covered reinforcing layer comprising at least one elongated reinforcing element of the invention around said two belt layers (106a, 106b).

More than one "zero degree belt" can be present in the tyre (100) (not represented in figure 1).

A tread band (109) is applied in radially outer position with respect to said belt structure (106). A sidewall (108) is also applied externally on said carcass ply (101), this sidewall extended in an axially outer position from the respective anchorage structure (103) to the edge of the tread band (109).

A tread under-layer (111) can be placed between said belt structure (106) and said tread band (109). Said tread under-layer (111) can have uniform thickness. Alternatively, said tread under-layer (111) can have variable thickness in transverse direction. For example, the thickness can be greater close to the external edges rather than at a central zone.

Said tread under-layer usually is extended on a surface corresponding substantially to the extension surface of said belt structure (106). Alternatively, said tread under-layer is extended only along at least one portion of the extension of said belt structure (106), for example at opposite lateral portions of said belt structure (106). A strip constituted by elastomeric compound (110), commonly known as "mini-sidewall", made of vulcanised elastomeric compound may be present in the zone of connection between the sidewalls (108) and the tread band (109), this mini-sidewall being generally obtained by means of co-extrusion with the tread band (109) and allowing an improvement of the mechanical interaction between the tread band (109) and the sidewalls (108). Preferably the end portion of the sidewall (108) directly covers the lateral edge of the tread band (109). In radially outer position, the tread band 109 has a rolling surface 109a intended to come into contact with the ground.

The rigidity of the anchorage structure or bead (103) can be improved by equipping the bead (103) of the tyre of a reinforcing layer generally known as "flipper" (120). The flipper (120) is a reinforcing layer which is wound around the respective bead core (102) and the bead filler (103) so as to partially surround them, said reinforcing layer being arranged between the carcass ply (101) and the bead (103). Usually the insert is in contact with said carcass ply (101) and said bead (103).

The flipper (120) usually comprises a plurality of reinforcing cords which are incorporated in a vulcanised elastomeric compound, said reinforcing cords being preferably according to the invention.

In proximity to the bead (103) of the tyre, a further reinforcing layer (121) can be arranged which is generally known with the term "chafer" and which has the function of increasing the rigidity of the tyre sidewall (108).

The chafer (121) generally comprises a plurality of reinforcing cords which are incorporated in a cross-linked elastomeric composition and which are preferably according to the invention or made of metal (e.g. steel cord).

Usually, the reinforcing layer (chafer) can be placed in a plurality of positions at the bead (103) and/or at the sidewall (108) of the tyre.

A layer or sheet (not illustrated) made of elastomeric compound can be arranged between the belt structure and the carcass structure. The layer can have a uniform thickness. Alternatively, the layer can have a thickness variable in axial direction. For example, the layer can have a greater thickness close to its axially outer edges with respect to the central zone (of crown).

Advantageously the layer or sheet can be extended on a surface substantially corresponding to the extension surface of said belt structure.

If the tyre is provided with two carcass plies, the reinforcing layer (chafer) (121) can for example be placed between said carcass plies. Preferably, the reinforcing layer (chafer) can be placed between the carcass plies.

Usually, the reinforcing layer (chafer) starts at the radially outer portion of the bead core (102), it follows the perimeter profile of the bead filler (104) and terminates at the tyre sidewall (108). Alternatively, the reinforcing layer (chafer) can be extended along the tyre sidewall (108) up to the ends of the belt structure of the tyre (106).

In the case of tyres without air chamber ("tubeless"), a rubber layer (112) generally known as "liner", which provides the necessary impermeability to the inflation air of the tyre, can be provided in an inner position with respect to the carcass structure. Preferably, the tyre (100) according to the present invention has a section ratio (H/C) lower than or equal to 0.65, preferably lower than or equal to 0.45, still more preferably lower than or equal to 0.35. Low values of the section ratio are advantageously used in "HP" and "UHP" tyres.

The processing for producing the tyre according to the present invention can be executed according to the techniques and by using the apparatuses that are known in the art, said processing comprising the building of the green tyre and the subsequent moulding and vulcanisation of the same.

The tyre according to the invention can be a tyre for vehicles with two, three or four wheels.

The tyre according to the invention can be for summer or winter use or for all seasons.

According to a non-illustrated embodiment, the tyre can be a tyre for motorcycle wheels which is typically a tyre that has a cross section characterized by a high transverse curvature.

Advantageously, the tyres which incorporate the reinforcing elements according to the invention maintain the performances in use in terms of driving stability, manoeuvrability, controllability, directionality and road grip also at the highest use temperatures and in the most extreme driving.

### EXPERIMENTAL PART

Herein below, there is the description of several preparation examples according to the invention or comparative, provided only for illustrating purposes and not limiting of the protective scope.

### ANALYSIS METHODS

### Tg and Tm Measurement of the semi-aromatic polyamide

The melting temperature Tm and transition temperature Tg of the present semi-aromatic polyamides were measured by DSC according to method ISO-11357-1/3, 2011, on pre-dried specimens in nitrogen atmosphere according to the following operating conditions:
Ramp 1: -10°C / +350°C, 10°C/min, N₂ 80 ml/min;
Ramp 2: 350°C / -10°C, 10°C/min, N₂ 80 ml/min;
Ramp 3: -10°C / +350°C, 20°C/min, N₂ 80 ml/min;

The Tg and the Tm were determined in the final passage with thermal ramp of 20°C/min.

Characterisation of the distribution of the molecular weights (MWD) of specimens of partially aromatic polyamide (PPA2).

This measurement has been carried out with a "multi-angle laser light scattering" (MALS) detector in line with a size-exclusion chromatography system (SEC) by using hexafluoroisopropanol (HFIP) as mobile phase.

The chromatograms presented a polymer peak well separated from the components with low molecular weight. Based on the comparison between the DRI (differential refractive index) signals and MALS 90° the peaks of the chromatogram were thus attributable: 1) high molecular weight polymer peak PPA2; 2) low molecular weight oligomers PPA2; 3) impurity or additives or residues of reaction; 4) and 5) system peaks pertaining to SEC mobile phase. Based on the comparison of the signals DRI and MALS the peak (3) has been attributed to reaction residues and therefore it has been excluded from the distribution of the molecular weights of the polymer.

Table 1 reports the content % of polymer (Peak 1), the content % of low molecular weight oligomers (Peak 2), the content % of impurities and/or additives and/or reaction residues (Peak 3):

**Table 1**

| Specimen | Polymer (1) % | Oligomers (2) % | Residues (3) % |
|---|---|---|---|
| Yarn in PPA2 | 94.31 | 2.11 | 3.58 |
| PPA2 polymer | 98.98 | 0.66 | 0.36 |

When the Tm of the polymer was <310°C, the degradation of the polymer chains was ≤ 5%, calculated according to the SEC-MALS technique.

### Measurement of the linear density of the yarns

For the measurement of the linear density, reference is made to flat threads/yarns, without twists applied in test step or in roping step, according to the tests standardised by the BISFA (Bureau International pour la Standardisation des Fibres Artificielles).

In particular, in the present experimental part reference is made to BISFA - Test methods for para-aramid fibre yarns 2002 edition: Determination of the linear density - Chapter 6; Determination of the tensile properties - Chapter 7 - Test procedure - Paragraph 7.5 - with initial pretensioning procedure.

### Measurement of the static properties: tensile tests

The breakage force of the elongated reinforcing elements has been evaluated with the Bisfa method 2002 (Testing methods for Para-Aramid filaments yarn).

On the basis of the force-elongation % curve, the elongations were calculated at 45N, at 90N, as well as the elongations at break at 20°C and 100°C and the tenacities. For each specimen, 20 cords were tested.

### Measurement of the dynamic properties (DMA)

The dynamic properties of the present reinforcing materials were measured according to the standard ASTM D5026, modified according to the following operating conditions:

| | |
|---|---|
| Dynamic deformation (%) | 0.1 |
| Frequency (Hz) | 10 |
| Initial Temperature (°C) | 30 |
| Final Temperature (°C) | 200 |
| Temperature (°C/min.) variation speed | 2 |
| Pre-load (N) | 15 |

### NMR Analysis

The polyamide PPA2 was analysed by means of NMR as described herein.

The specimen was analysed with a Bruker Avance 500 MHz spectrometer, probe 5 mm, calibrated by placing the residual signal of the deuterated solvent at 4.24 ppm in the 1H spectrum and 69.32 ppm (118.08, 120.32, 122.55, 124.80 ppm) in the 13C spectrum.

Preparation of the specimen: A known quantity of specimen (about 35 mg) was dissolved in hexafluoroisopropanol-d, at ambient temperature. The specimen thus obtained was then housed within the thermostat instrument at 298°K and analysed.

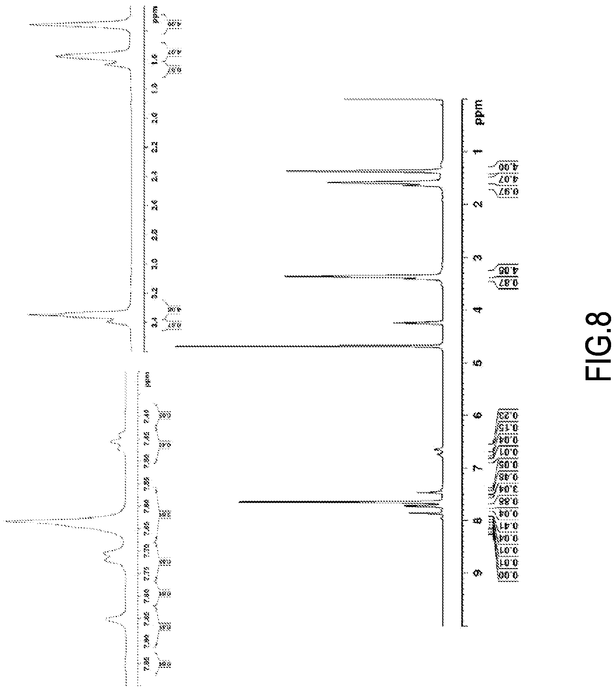

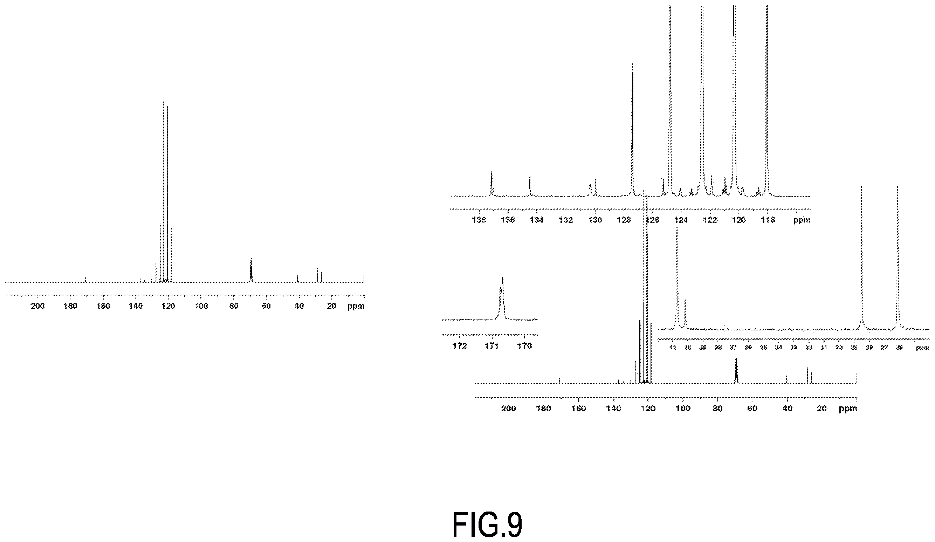

Figure 8 reports the 1H-NMR spectrum. Figure 9 reports the 13C-NMR spectrum.

From the analysis of the expansions in the 13C spectrum it was possible to identify 3 carbonyls, (one is a right shoulder of the main signal) respectively at 170.74, 170.68 and 170.63 ppm; a series of aromatic carbons between 140 and 117 ppm, and aliphatic carbons of CH2 type on heteroatom between 41 - 40 ppm and two aliphatic carbon groups between 29 and 25 ppm. The adipate was present but in a quantity not quantifiable via NMR.

The main components of the polymer were 1,4-Tetramethylenediamine (N4), 1,6-Hexamethylenediamine (N6), Terephthalic acid (T, 61%) and Isophthalic acid (I, 39%) and traces of adipic acid (<3%). For the diamines, the ratio N6 : T was equal to 2:1.5 while that N4 : I was 2:1.

The repeating units present in the polymer were the following:

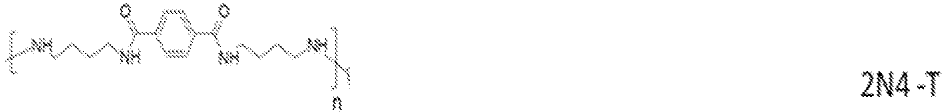

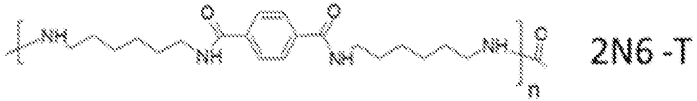

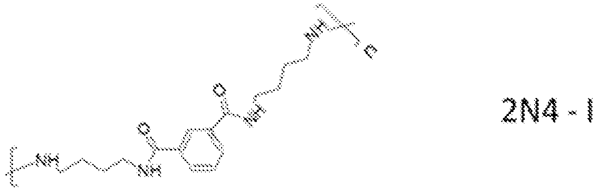

### Polyamides

Several properties of the semi-aromatic polyamides (PPA) used in the elongated reinforcing elements according to the invention, compared with those of the aliphatic polyamides PA6,6 and PA 4,6 are summarised in the following Table 2:

**Table 2**

| Polyamide | Class | Supplier / Name | Tg | Tm | Properties |
|---|---|---|---|---|---|
| PPA0 | Semi-aromatic (PPA) | Radici | 100°C | 298°C | Relative viscosity 2.12 |
| | | | | | Viscosity index 102 |
| | | | | | Melt viscosity 55 a 320 °C at cutting 1000 1/s (Pa *s) |
| PPA1 | Semi-aromatic (PPA) | DSM FORTII ACE EX-100 | 140°C | 312°C | |
| PPA2 | Semi-aromatic (PPA) | DSM FORTII ACE P1424A | 132°C | 286°C | Relative viscosity 2.17 - 2.32 Density 1600 g/dm³ |
| PA6,6 | Aliphatic | PHP ENKA | 50°C | 265°C | Crystallinity 50% |
| | | | | | Density 1140 g/dm³ |
| PA4,6 | Aliphatic | DSM Stanylenka | 78°C | 295°C | Crystallinity 70% |
| | | | | | Density 1180 g/dm³ |

| | | | | | |
|---|---|---|---|---|---|
| PPA0 was a semi-aromatic polyamide with low content of aromatic component (terephthalic acid), in which the aliphatic diamine portion was mainly constituted by 1,4 diamine (repeating units 4T). PPA2 was added with thermal stabilizing agent; the aliphatic diamine portion was mainly constituted by 1,6-diamine (6T and/or 6I). | | | | | |

### Example 1

### Preparation of the yarns

The materials were dried before the processing for 24 hours in a static drying oven. A single-screw extruder (screw diameter 30 mm, L/D=30) was connected to a feed block with a die containing circular openings with a diameter of about 1 mm. The rotation speed of the screw was about 100 revolutions/min. The stay time of the melted polymer in the zones of extrusion of the casting, in the feed block and in the die was about 2 minutes. The temperatures in the extrusion step were set as indicated in the following Table 3. A grid filter was applied with openings of 25 micrometres.

The melted fibres were cooled on a cooling cylinder at 20°C in order to prevent as much as possible the development of the crystallisation.

The speed of the cooling cylinder was 750 m/min. The fibres were collected in reels. In a second step, these fibres were exposed to a single-axis stretching process, guiding the fibres on two stretching units. The fibres were transferred on the first stretching unit with a speed of 3.0 m/min.; the speed of the second stretching unit has been varied. The temperature of the heated cylinders was about 200°C and the contact time therewith on the order of a few seconds.

The main operating conditions and the total stretch ratios applied are shown in the following Table 3:

**Table 3: process conditions**

| | PA4,6 | PA6,6 | PPA1 | PPA2 |
|---|---|---|---|---|
| T extruder (°C) | 310 | 280 | 325 | 305 |
| T feed-block (°C) | 280 | 250 | 305 | 295 |
| T die-lip (°C) | 320 | 290 | 340 | 310 |
| Total stretching ratio | 3.5:1 | 4:1 | 3:1 | 3.5:1 |
| T of stretching (°C) | 200 | 200 | 200 | 200 |

### Preparation of the reinforcing elements

The following reinforcing elements were manufactured:
- cord 1 (1400/1): represents a comparative embodiment attained with a multifilament yarn of nylon (NY46) with nominal thread count 1400 dtex, 150 tpm (twisting per metre) (27x27);
- cord 2 (1400/1): is a comparative elongated reinforcing element attained with a multifilament yarn of nylon (NY66) with nominal thread count 1400 dtex, 150 tpm;
- cord 3 (1270/1): according to the invention, attained with a multifilament yarn of PPA1, nominal thread count 1270 dtex, 150 tpm;
- cord 4 (1680/3): according to the invention, attained with a multifilament yarn of PPA2, nominal thread count 1680 dtex for 3 ends, each with 220 tpm, in turn twisted with parallel filaments with the same number of 220 twists Z/S per metre.

The cords 1-4 were subjected to treatment with conventional adhesive-making agent with RFL base and characterized by their tensile properties.

### Characterization of the cords 1-4

The comparative elongated reinforcing elements and those according to the invention Cord 1 - Cord 4 prepared as described above from the polyamides PA4,6, PA6,6, PPA1 and PPA2 were characterized providing the following results:

**Table 4A (Average values on 20 reels not made adhesive)**

| | PA4,6 | PA6,6 | PPA1 | PPA2 |
|---|---|---|---|---|
| Cord | 1 | 2 | 3 | 4 |
| BF (N) | 100 | 114 | 40 | 181 |
| BT (cN/tex) | 68 | 79 | 31 | 40 |
| EAB (%) | 19.1 | 18.5 | 20.7 | 29.5 |
| EASF (%) | 7.1 | 7.7 | 13.2 | 2.1 |
| HAS (%) | 4.9 | 6.2 | 4.5 | 14.8 |
| Moisture absorption | 2.7% | 2.7% | 0.2 % | 0.4% |

**Table 4B (Average values on 20 reels made adhesive)**

| | PA4,6 | PA6,6 | PPA1 | PPA2 |
|---|---|---|---|---|
| Cord | 1 | 2 | 3 | 4 |
| BF (N) | 96 | 110 | 39 | 170 |
| BT (cN/tex) | 66 | 77 | 30 | 39 |
| EAB (%) | 17.8 | 17.2 | 20.7 | 29.4 |
| EASF (%) | 7.0 | 7.1 | 13.2 | 1.7 |
| HAS (%) | 3.6 | 5.1 | 4.5 | 3.9 |
| Moisture absorption | 5.1% | 5.2% | 2.5% | 2.2% |

in which
BF is the force at break
BT is the tenacity at break
EAB is the elongation at break %
EASF is the elongation % for a force of 34 N (Elongation At Standard Force)
HAS is the percentage free shrink at 177°C (Heat Shrink) measured according to Bisfa method Ed. 2002.

As is inferred from Tables 4A and 4B, the PPA1 - while having a good processability - resulted damaged by the high-temperature extrusion with possible partial degradation of the polymer, as shown by the lower tenacity and by the decreased force at break of the cords while the PPA2 showed a satisfactory maintenance of these properties.

The free shrinking at 177°C for the semi-aromatic polyamides was less than that of the classic nylon (PA6,6), indicating a greater thermal stability of the fibres.

Advantageously, the semi-aromatic PAs had a water absorption that was practically zero (0.2%), facilitating the initial conditioning step and drying of the polymer before the spinning, while for the aliphatic PAs much greater values were observed (2.7%).

### Example 2

Reinforcing elements according to the invention and comparative examples have been prepared as described in example 1, according to the specifications reported in the following Table 5:

**Table 5**

| Cord No. | Polyamide | Tm °C | Tg °C | Stretching ratio | Cord construction | E1/E2 |
|---|---|---|---|---|---|---|
| 5 | PPA2 | 286 | 132 | 3.4:1 | 1680 x3 | 3.7 |
| 6 | PPA0 | 298 | 100 | 3.7:1 | 1260 x 1 | 1.4 |
| 7 | PPA1 | 312 | 140 | 2.5:1 | 1270x1 | 0.8 |
| 8 | PA4,6 | 295 | 78 | 3.0:1 | 1400 x 1 | -- |
| 9 | PA6,6 | 265 | 65 | 3.0:1 | 1400 x 1 | -- |

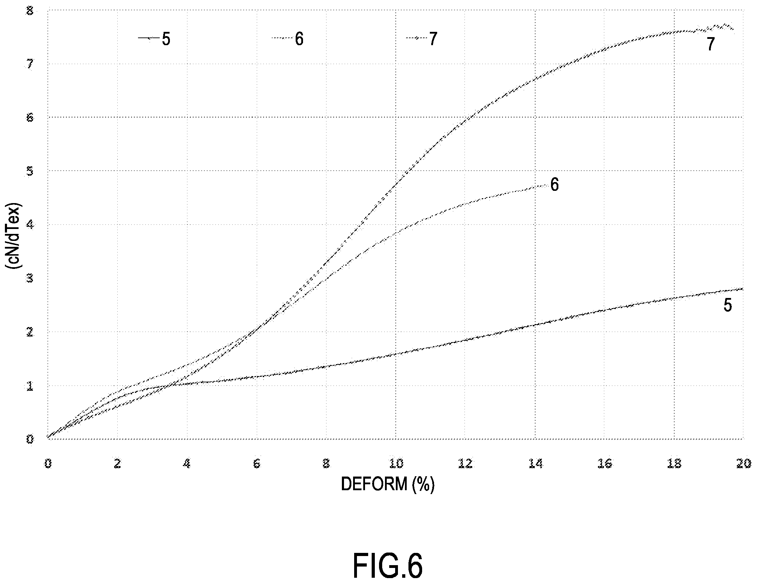

The cords 5 - 9 were made adhesive according to the conventional process with single bath RFL and subjected to the test with tensile modulus - elongation % according to Bisfa Ed. 2002, providing the curves reported in Figure 6.

As can be observed in Figure 6, the curves of the cords 5 and 6 had a quick increase of the tenacity at low deformations up to about 2.5 - 3 %, an increase that then suddenly decreased. From the graph, it appeared that the tenacity of the cords according to the invention (cords 5 and 6) manifested the bimodal trend characterized by the incremental ratio as previously defined E1/E2 greater than 1 (precisely 3.7 and 1.4) while for the cord 7 prepared with stretching ratio equal to 2.5, such ratio was smaller (0.8).

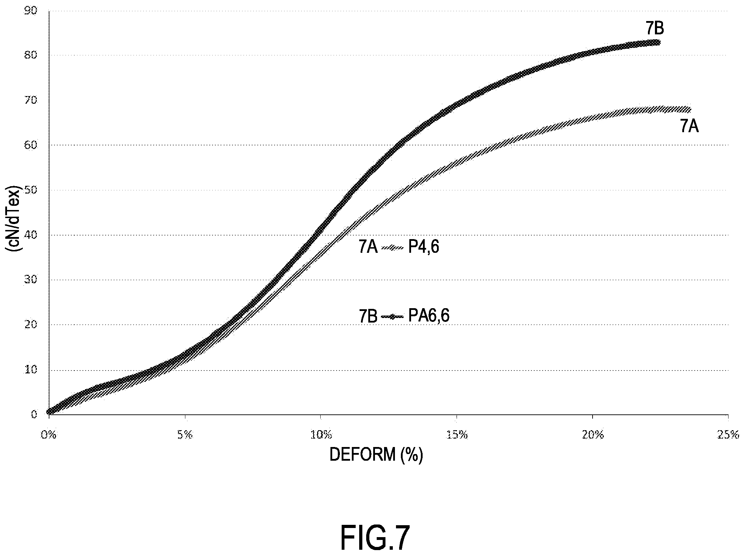

As shown for example in Figure 7, this particular trend of the tensile modulus did not appear in cords made of PA4,6 (curve 7A) or PA6,6 (curve 7B), and not even as shown in Figure 4 in cords made of aromatic polyamides (curve 4A), of aliphatic polyamides (4B) or of aromatic polyamides in combination with aliphatic polyamides (curve 4C) but only in cords according to the invention comprising semi-aromatic polyamides as defined herein (curve 4D).

This bimodal trend of the tensile modulus is particularly interesting for the reinforcing applications in tyres, especially in carcass structure of HP and UHP tyres. The use of these reinforcing elements allows the substantial maintenance of the performance of the vehicle even in conditions of lower inflation pressure of the tyre.

### Measurement of the static properties: polymer vs. cord tensile tests.

The values of force-elongation % were measured in the tensile test on specimens of semi-aromatic polyamide PPA2 (test according to standard ISO 37, Type 1) (Fig. 5A) and on a crude cord thereof made adhesive according to the invention (Bisfa method Ed. 2002) (Fig. 5B)

As can be observed from figures 5A and 5B, the characteristic bimodal trend of the tensile modulus was absent in the polymer per se (PPA2) but appears in the made adhesive cord.

### Measurement of the dynamic properties (DMA) of the elongated reinforcing elements

Shown in Figure 10 are the diagrams relative to the trend of the dynamic elastic modulus of comparative cords (PA4,6, PA6,6) and cords according to the invention (PPA2). As can be observed from the graph, both the cords made of aliphatic polyamides had a clear drop of the modulus (curves 10B and 10C) between 60°C and 120°C. This drop was less marked for the PA4,6 (curve 10B), but still too high to ensure good mechanical properties in the interval T of use of the tyre. However, in the cords according to the invention comprising PPA2 (curve 10A), the modulus remained substantially constant (drop less than 15%) for a wide interval of temperatures, predictive of the maintenance of the mechanical properties in all the actual use conditions of the tyre.

## Claims

1. A tyre for vehicle wheels comprising at least one reinforced structural element comprising at least one cross-linked elastomeric material and at least one elongated reinforcing element,
wherein said at least one elongated reinforcing element comprises one or more polymeric threads comprising at least one semi-aromatic polyamide having a glass transition temperature (Tg) greater than 90° C measured by DSC according to ISO-11357-1/3, 2011, **characterized in that**
said at least one elongated reinforcing element shows in the diagram tenacity - elongation % measured according to the Bisfa method (Test methods for para-aramid fibre yarns, 2002 edition) a bimodal trend of tenacity, **characterized by** an incremental ratio R between the chord modulus E1 and chord modulus E2 greater than 1,
where the chord modulus E1 represents the ratio between the variation of the tenacity and the variation of the elongation measured at 2% and 0% elongation, and the chord modulus E2 represents the ratio between the variation of the tenacity and the variation of the elongation measured at 6% and 2% elongation, respectively.

2. The tyre according to claim 1 wherein said at least one reinforced structural element is a carcass structure.

3. The tyre according to claim 1 or 2 wherein said at least one elongated reinforcing element shows in the diagram tenacity - elongation % a bimodal trend of tenacity, **characterized by** an incremental ratio R between the chord modulus E1 and the chord module E2 greater than 1.1, preferably greater than 1.2.

4. The tyre according to any one of claims 1 to 3, wherein said at least one elongated reinforcing element comprises one or more polymeric threads comprising at least one semi-aromatic polyamide having a glass transition temperature (Tg) greater than 100° C, preferably greater than 120° C measured by DSC according to ISO-11357-1/3, 2011.

5. The tyre according to any one of claims 1 to 4, wherein said at least one elongated reinforcing element comprises one or more polymeric threads comprising at least one semi-aromatic polyamide having a melting temperature Tm less than 310° C, preferably less than 300° C, more preferably less than 290° C measured by DSC according to ISO-11357-1/3, 2011.

6. The tyre according to any one of claims 1 to 5, wherein said at least one elongated reinforcing element comprises one or more polymeric threads comprising at least one semi-aromatic polyamide, wherein said semi-aromatic polyamide is a polyphthalamide having Tg of at least 120° C and Tm less than 290° C.

7. The tyre according to any one of claims 1 to 6, wherein one or more said polymeric threads have been prepared through a process which includes at least one stretching step, where the total stretching ratio is greater than 2.9:1, preferably greater than 3:1, more preferably greater than 3.1:1.

8. The tyre according to any one of claims 1 to 7, wherein the tyre is a high performance (HP) or very high performance (UHP) tyre.

9. An elongated reinforcing element for tyres comprising one or more polymeric threads comprising at least one semi-aromatic polyamide having a glass transition temperature (Tg) greater than 90° C measured by DSC according to ISO-11357-1/3, 2011, **characterized in that**
said at least one elongated reinforcing element shows in the diagram tenacity - elongation % measured according to the Bisfa method (Test methods for para-aramid fibre yarns edition 2002) a bimodal trend of tenacity, **characterized by** an incremental ratio R between the chord modulus E1 and the chord modulus E2 greater than 1,
where the chord modulus E1 represents the ratio between the variation of the tenacity and the variation of the elongation measured at 2% and 0% elongation, and the chord modulus E2 represents the ratio between the variation of the tenacity and the variation of the elongation measured at 6% and 2% elongation, respectively.

10. The elongated reinforcing element for tyres according to claim 9 wherein said incremental ratio R between the chord modulus E1 and the chord module E2 is greater than 1.1, preferably greater than 1.2.

11. The elongated reinforcing element for tyres according to claim 9 or 10 wherein said one or more polymeric threads comprise at least one semi-aromatic polyamide having a glass transition temperature (Tg) greater than 100° C, preferably greater than 120° C measured by DSC according to ISO-11357-1/3, 2011 and/or a melting temperature Tm preferably less than 310° C, preferably less than 300° C, more preferably less than 290° C measured by DSC according to ISO-11357-1/3, 2011.

12. The elongated reinforcing element for tyres according to any one of claims 9 to 11 wherein one or more said polymeric threads have been prepared through a process which includes at least one stretching step, where the total stretching ratio is greater than 2.9:1, preferably greater than 3:1, more preferably greater than 3.1:1.

13. The elongated reinforcing element for tyres according to any one of claims 9 to 12 **characterized by** a tenacity of at least 30 cN / tex, preferably at least 35 cN / tex, more preferably at least 40 cN / tex, even more preferably at least 45 cN / tex, measured according to Bisfa Ed. 2002 method.

14. A reinforcing fabric for tyres comprising at least one elongated reinforcing element according to any one of claims 9 to 13.

15. A tyre component comprising at least one reinforcing element or at least one reinforcing fabric according to any one of claims 9 to 14 incorporated in, or at least partially covered by, an elastomeric compound for tyres.

16. The tyre component according to claim 15 selected from carcass structure, belt structure, additional belt layer, rubber coating layer, sidewall and bead reinforcing layers (chafer and flipper), preferably said component is a carcass structure.

17. A process for the production of the polymeric thread of the elongated reinforcing element according to claims from 9 to 13, which includes:
a) providing a polyamide composition comprising at least one semi-aromatic polyamide having a glass transition temperature (Tg) greater than 90° C measured by DSC according to ISO-11357-1/3, 2011,
b) melting said polyamide composition at a temperature not greater than Tm + 15° C, where Tm is the melting temperature of the semi-aromatic polyamide measured by DSC according to ISO-11357-1/3, 2011 to give a melted polyamide composition,
c) extruding the melted polyamide composition to give a polymeric thread and cooling the polymeric thread,
d) stretching the cooled polymeric thread to a stretching temperature Ts less than Tm and greater than Tg, in one or more stretching steps, with a total stretching ratio greater than 2.9:1,
e) optionally, allowing the stretched polymeric thread to relax at a temperature between the stretching temperature Ts and the melting temperature Tm.

18. The process for the production of the polymeric thread according to claim 17 which comprises the following steps:
a) providing a polyamide composition comprising at least one semi-aromatic polyamide having a melting temperature Tm preferably less than 310° C, more preferably less than 300° C and a Tg preferably at least 110° C, more preferably at least 120° C,
b) melting said polyamide composition at a temperature not greater than Tm, to give a melted polyamide composition,
c) extruding the melted polyamide composition to give a polymeric thread, cooling and winding said thread at a speed comprised between 200 and 2000 m/min.,
d) stretching the polymeric thread at a temperature preferably between 140° C and 200° C and with a total stretching ratio preferably from 2.9:1 to 5:1, more preferably from 3:1 to 4:1,
e) relaxing the constrained stretched polymer thread.

19. Use of at least one elongated reinforcing element or fabric according to any one of claims 9 to 14 in the carcass structure of a high performance (HP), very high performance (UHP) tyre or of a tyre for SUV vehicles.

## Patentansprüche

1. Reifen für Fahrzeugräder, der mindestens ein verstärktes Strukturelement umfasst, das mindestens ein vernetztes elastomeres Material und mindestens ein längliches Verstärkungselement umfasst,
wobei das mindestens eine längliche Verstärkungselement einen oder mehrere Polymerfäden umfasst, die mindestens ein halbaromatisches Polyamid mit einer Glasübergangstemperatur (Tg) von mehr als 90° C, gemessen durch DSC gemäß ISO-11357-1/3, 2011, umfassen, **dadurch gekennzeichnet, dass**
das mindestens eine langgestreckte Verstärkungselement im Diagramm Festigkeit - Dehnung %, gemessen nach dem Bisfa-Verfahren (Testverfahrenn für Garne aus Para-Aramidfasern, Ausgabe 2002), einen bimodalen Verlauf der Festigkeit aufweist, **gekennzeichnet durch** ein inkrementelles Verhältnis R zwischen dem Sehnenmodul E1 und dem Sehnenmodul E2 von mehr als 1,
wobei der Sehnenmodul E1 jeweils das Verhältnis zwischen der Veränderung der Zähigkeit und der Veränderung der Dehnung, gemessen bei 2 % und 0 % Dehnung, darstellt und der Sehnenmodul E2 das Verhältnis zwischen der Veränderung der Zähigkeit und der Veränderung der Dehnung, gemessen bei 6 % und 2 % Dehnung, darstellt.

2. Reifen nach Anspruch 1, wobei das mindestens eine verstärkte Strukturelement eine Karkassenstruktur ist.

3. Reifen nach Anspruch 1 oder 2, wobei das mindestens eine langgestreckte Verstärkungselement im Diagramm Zähigkeit - Dehnung % einen bimodalen Trend der Zähigkeit zeigt, **gekennzeichnet durch** ein inkrementelles Verhältnis R zwischen dem Sehnenmodul E1 und dem Sehnenmodul E2 größer als 1,1, vorzugsweise größer als 1,2.

4. Reifen nach einem der Ansprüche 1 bis 3, wobei das mindestens eine längliche Verstärkungselement einen oder mehrere Polymerfäden umfasst, die mindestens ein halbaromatisches Polyamid mit einer Glasübergangstemperatur (Tg) von mehr als 100° C, vorzugsweise mehr als 120° C, gemessen durch DSC gemäß ISO-11357-1/3, 2011, umfassen.

5. Reifen nach einem der Ansprüche 1 bis 4, wobei das mindestens eine längliche Verstärkungselement einen oder mehrere Polymerfäden umfasst, die mindestens ein halbaromatisches Polyamid mit einer Schmelztemperatur Tm von weniger als 310° C, vorzugsweise weniger als 300° C, besonders bevorzugt weniger als 290° C, gemessen durch DSC gemäß ISO-11357-1/3, 2011, umfassen.

6. Reifen nach einem der Ansprüche 1 bis 5, wobei das mindestens eine längliche Verstärkungselement einen oder mehrere Polymerfäden umfasst, die mindestens ein halbaromatisches Polyamid umfassen, wobei das halbaromatische Polyamid ein Polyphthalamid mit einer Tg von mindestens 120° C und Tm von weniger als 290° C ist.

7. Reifen nach einem der Ansprüche 1 bis 6, wobei einer oder mehrere der Polymerfäden durch ein Verfahren hergestellt wurden, das mindestens einen Streckschritt enthält, wobei das Gesamtstreckverhältnis größer als 2,9:1, vorzugsweise größer als 3:1, noch bevorzugter größer als 3,1:1 ist.

8. Reifen nach einem der Ansprüche 1 bis 7, wobei der Reifen ein Reifen mit hoher Leistung (HP) oder ein Reifen mit sehr hoher Leistung (UHP) ist.

9. Langgestrecktes Verstärkungselement für Reifen, das einen oder mehrere Polymerfäden umfasst, die mindestens ein halbaromatisches Polyamid mit einer Glasübergangstemperatur (Tg) von mehr als 90° C, gemessen durch DSC gemäß ISO-11357-1/3, 2011, umfassen, **dadurch gekennzeichnet, dass**
das mindestens eine langgestreckte Verstärkungselement im Diagramm Festigkeit - Dehnung %, gemessen nach dem Bisfa-Verfahren (Testverfahrenn für Garne aus Para-Aramidfasern, Ausgabe 2002), einen bimodalen Verlauf der Festigkeit aufweist, **gekennzeichnet durch** ein inkrementelles Verhältnis R zwischen dem Sehnenmodul E1 und dem Sehnenmodul E2 von mehr als 1,
wobei der Sehnenmodul E1 jeweils das Verhältnis zwischen der Veränderung der Zähigkeit und der Veränderung der Dehnung, gemessen bei 2 % und 0 % Dehnung, darstellt und der Sehnenmodul E2 das Verhältnis zwischen der Veränderung der Zähigkeit und der Veränderung der Dehnung, gemessen bei 6 % und 2 % Dehnung, darstellt.

10. Langgestrecktes Verstärkungselement für Reifen nach Anspruch 9, wobei das inkrementelle Verhältnis R zwischen dem Sehnenmodul E1 und dem Sehnenmodul E2 größer als 1,1, vorzugsweise größer als 1,2 ist.

11. Langgestrecktes Verstärkungselement für Reifen nach Anspruch 9 oder 10, wobei der eine oder die mehreren Polymerfäden mindestens ein halbaromatisches Polyamid umfassen, das eine Glasübergangstemperatur (Tg) von mehr als 100° C, vorzugsweise mehr als 120° C, gemessen durch DSC nach ISO-11357-1/3, 2011, und/oder eine Schmelztemperatur Tm von vorzugsweise weniger als 310° C, vorzugsweise weniger als 300° C, besonders bevorzugt weniger als 290° C, gemessen durch DSC nach ISO-11357-1/3, 2011, aufweist.

12. Langgestrecktes Verstärkungselement für Reifen nach einem der Ansprüche 9 bis 11, wobei einer oder mehrere der Polymerfäden durch ein Verfahren hergestellt wurden, das mindestens einen Streckschritt enthält, wobei das Gesamtstreckverhältnis größer als 2,9:1, vorzugsweise größer als 3:1, noch bevorzugter größer als 3,1:1 ist.

13. Langgestrecktes Verstärkungselement für Reifen nach einem der Ansprüche 9 bis 12, **gekennzeichnet durch** eine Festigkeit von mindestens 30 cN/tex, vorzugsweise mindestens 35 cN/tex, weiter bevorzugt mindestens 40 cN/tex, noch weiter bevorzugt mindestens 45 cN/tex, gemessen nach dem Bisfa-Verfahren, Ausg. 2002.

14. Verstärkungsgewebe für Reifen, das mindestens ein längliches Verstärkungselement nach einem der Ansprüche 9 bis 13 umfasst.

15. Reifenkomponente, die mindestens ein Verstärkungselement oder mindestens ein Verstärkungsgewebe nach einem der Ansprüche 9 bis 14 umfasst, das in eine Elastomermischung für Reifen eingearbeitet oder mindestens teilweise von dieser bedeckt ist.

16. Reifenkomponente nach Anspruch 15, ausgewählt aus Karkassenstruktur, Gürtelstruktur, zusätzlicher Gürtelschicht, Gummibeschichtungsschicht, Seitenwand- und Wulstverstärkungsschichten (Chafer und Flipper), wobei die Komponente vorzugsweise eine Karkassenstruktur ist.

17. Verfahren zur Herstellung des Polymerfadens des länglichen Verstärkungselements nach einem der Ansprüche 9 bis 13, das enthält:
a)Bereitstellen einer Polyamidzusammensetzung, die mindestens ein halbaromatisches Polyamid mit einer Glasübergangstemperatur (Tg) von mehr als 90° C, gemessen durch DSC gemäß ISO-11357-1/3, 2011, umfasst,
b)Schmelzen der Polyamidzusammensetzung bei einer Temperatur von nicht mehr als Tm + 15° C, wobei Tm die Schmelztemperatur des semi-aromatischen Polyamids, gemessen durch DSC gemäß ISO-11357-1/3, 2011, ist, um eine geschmolzene Polyamidzusammensetzung zu erhalten,
c)Extrudieren der geschmolzenen Polyamidzusammensetzung, um einen Polymerfaden zu erhalten, und Kühlen des Polymerfadens,
d)Strecken des gekühlten Polymerfadens auf eine Strecktemperatur Ts kleiner als Tm und größer als Tg in einem oder mehreren Streckschritten mit einem Gesamtstreckverhältnis größer als 2,9: 1,
e)optional, Entspannenlassen des streckten Polymerfadens bei einer Temperatur zwischen der Strecktemperatur Ts und der Schmelztemperatur Tm.

18. Verfahren zur Herstellung des Polymerfadens nach Anspruch 17, das folgende Schritte umfasst:
a)Bereitstellen einer Polyamidzusammensetzung, umfassend mindestens ein halbaromatisches Polyamid mit einer Schmelztemperatur Tm von vorzugsweise weniger als 310° C, mehr bevorzugt weniger als 300° C und einer Tg von vorzugsweise mindestens 110° C, mehr bevorzugt mindestens 120° C,
b)Schmelzen der Polyamidzusammensetzung bei einer Temperatur, die nicht höher als Tm ist, um eine geschmolzene Polyamidzusammensetzung zu erhalten,
c)Extrudieren der geschmolzenen Polyamidzusammensetzung, um einen Polymerfaden zu erhalten, Abkühlen und Aufwickeln des Fadens mit einer Geschwindigkeit, die zwischen 200 und 2000 m/min. umfasst,
d)Strecken des Polymerfadens bei einer Temperatur von vorzugsweise zwischen 140° C und 200° C und mit einem Gesamtstreckverhältnis von vorzugsweise 2,9:1 bis 5:1, besonders bevorzugt von 3:1 bis 4:1,
e)Entspannen des eingeschränkten gestreckten Polymerfadens.

19. Verwenden mindestens eines langgestreckten Verstärkungselements oder Gewebes nach einem der Ansprüche 9 bis 14 in der Karkassenstruktur eines Hochleistungsreifens (HP), eines Reifens mit sehr hoher Leistung (UHP) oder eines Reifens für SUV-Fahrzeuge.

## Revendications

1. Pneu pour roues de véhicule, comprenant au moins un élément structurel renforcé comprenant au moins un matériau élastomérique réticulé et au moins un élément de renforcement allongé,
dans lequel ledit au moins un élément de renforcement allongé comprend un ou plusieurs fils polymériques comprenant au moins un polyamide semi-aromatique ayant une température de transition vitreuse (Tg) supérieure à 90 °C, mesurée par DSC selon ISO-11357-1/3, 2011, **caractérisé en ce que**
ledit au moins un élément de renforcement allongé présente, dans le diagramme ténacité - allongement % mesuré selon la méthode Bisfa (méthodes d'essai pour filés de fibre para-aramide, édition 2002), une tendance bimodale de ténacité, **caractérisé par** un rapport incrémental R entre le module entre deux points E1 et le module entre deux points E2 supérieur à 1,
où le module entre deux points E1 représente le rapport entre la variation de la ténacité et la variation de l'allongement mesuré à un allongement de 2 % et de 0 %, et le module entre deux points E2 représente le rapport entre la variation de la ténacité et la variation de l'allongement mesuré à un allongement de 6 % et de 2 %, respectivement.

2. Pneu selon la revendication 1, dans lequel ledit au moins un élément structurel renforcé est une structure de carcasse.

3. Pneu selon la revendication 1 ou 2, dans lequel ledit au moins un élément de renforcement allongé présente, dans le diagramme ténacité - allongement %, une tendance bimodale de ténacité, **caractérisé par** un rapport incrémental R entre le module entre deux points E1 et le module entre deux points E2 supérieur à 1,1, de préférence supérieur à 1,2.

4. Pneu selon l'une quelconque des revendications 1 à 3, dans lequel ledit au moins un élément de renforcement allongé comprend un ou plusieurs fils polymériques comprenant au moins un polyamide semi-aromatique ayant une température de transition vitreuse (Tg) supérieure à 100 °C, de préférence supérieure à 120 °C mesurée par DSC selon ISO-11357-1/3, 2011.

5. Pneu selon l'une quelconque des revendications 1 à 4, dans lequel ledit au moins un élément de renforcement allongé comprend un ou plusieurs fils polymériques comprenant au moins un polyamide semi-aromatique ayant une température de fusion Tm inférieure à 310 °C, de préférence inférieure à 300 °C, mieux encore inférieure à 290 °C mesurée par DSC selon ISO-11357-1/3, 2011.

6. Pneu selon l'une quelconque des revendications 1 à 5, dans lequel ledit au moins un élément de renforcement allongé comprend un ou plusieurs fils polymériques comprenant au moins un polyamide semi-aromatique, dans lequel ledit polyamide semi-aromatique est un polyphtalamide ayant une Tg d'au moins 120 °C et une Tm inférieure à 290 °C.

7. Pneu selon l'une quelconque des revendications 1 à 6, dans lequel un ou plusieurs dit fils polymériques ont été préparés par le biais d'un procédé qui inclut au moins une étape d'étirage, où le rapport d'étirage total est supérieur à 2,9 : 1, de préférence supérieur à 3 : 1, mieux encore supérieur à 3,1 : 1.

8. Pneu selon l'une quelconque des revendications 1 à 7, dans lequel le pneu est un pneu haute performance (HP) ou très haute performance (UHP).

9. Élément de renforcement allongé pour des pneus, comprenant un ou plusieurs fils polymériques comprenant au moins un polyamide semi-aromatique ayant une température de transition vitreuse (Tg) supérieure à 90 °C mesurée par DSC selon ISO-11357-1/3, 2011, **caractérisé en ce que**
ledit au moins un élément de renforcement allongé présente, dans le diagramme ténacité - allongement % mesuré selon la méthode Bisfa (méthodes d'essai pour filés de fibre para-aramide, édition 2002), une tendance bimodale de ténacité, **caractérisé par** un rapport incrémental R entre le module entre deux points E1 et le module entre deux points E2 supérieur à 1,
où le module entre deux points E1 représente le rapport entre la variation de la ténacité et la variation de l'allongement mesuré à un allongement de 2 % et de 0 %, et le module entre deux points E2 représente le rapport entre la variation de la ténacité et la variation de l'allongement mesuré à un allongement de 6 % et de 2 %, respectivement.

10. Élément de renforcement allongé pour pneus selon la revendication 9, dans lequel ledit rapport incrémental R entre le module entre deux points E1 et le module entre deux points E2 est supérieur à 1,1, de préférence supérieur à 1,2.

11. Élément de renforcement allongé pour pneus selon la revendication 9 ou 10, dans lequel ledit un ou lesdits plusieurs fils polymériques comprennent au moins un polyamide semi-aromatique ayant une température de transition vitreuse (Tg) supérieure à 100 °C, de préférence supérieure à 120 °C mesurée par DSC selon ISO-11357-1/3, 2011 et/ou une température de fusion Tm de préférence inférieure à 310 °C, de préférence inférieure à 300 °C, mieux encore inférieure à 290 °C mesurée par DSC selon ISO-11357-1/3, 2011.

12. Élément de renforcement allongé pour pneus selon l'une quelconque des revendications 9 à 11, dans lequel un ou plusieurs dits fils polymériques ont été préparés par le biais d'un procédé qui inclut au moins une étape d'étirage, où le rapport d'étirage total est supérieur à 2,9 : 1, de préférence supérieur à 3 : 1, mieux encore supérieur à 3,1 : 1.

13. Élément de renforcement allongé pour pneus selon l'une quelconque des revendications 9 à 12, **caractérisé par** une ténacité d'au moins 30 cN / tex, de préférence d'au moins 35 cN / tex, mieux encore d'au moins 40 cN / tex, idéalement d'au moins 45 cN / tex, mesurée selon la méthode Bisfa Ed. 2002. méthode 2002.

14. Tissu de renforcement pour pneus, comprenant au moins un élément de renforcement allongé selon l'une quelconque des revendications 9 à 13.

15. Composant de pneu, comprenant au moins un élément de renforcement ou au moins un tissu de renforcement selon l'une quelconque des revendications 9 à 14, incorporé dans, ou au moins partiellement couvert par, un composé élastomérique pour pneus.

16. Composant de pneu selon la revendication 15, sélectionné parmi une structure de carcasse, une structure de ceinture, une couche de ceinture supplémentaire, une couche de revêtement en caoutchouc, des couches de renforcement de paroi latérale et de talon (bandelette talon et bandelette support), de préférence ledit composant est une structure de carcasse.

17. Procédé pour la production du fil polymérique de l'élément de renforcement allongé selon les revendications 9 à 13, qui inclut :
a) la fourniture d'une composition polyamide comprenant au moins un polyamide semi-aromatique ayant une température de transition vitreuse (Tg) supérieure à 90 °C mesurée par DSC selon ISO-11357-1/3, 2011,
b) la fusion de ladite composition polyamide à une température non supérieure à Tm + 15 °C, où Tm est la température de fusion du polyamide semi-aromatique mesurée par DSC selon ISO-11357-1/3, 2011, pour produire une composition polyamide fondue,
c) l'extrusion de la composition polyamide fondue pour produire un fil polymérique, et le refroidissement du fil polymérique,
d) l'étirage du fil polymérique refroidi jusqu'à une température d'étirage Ts inférieure à Tm et supérieure à Tg, dans une ou plusieurs étapes d'étirage, avec un rapport d'étirage total supérieur à 2,9 : 1,
e) optionnellement, la relaxation libre du fil polymérique étiré à une température entre la température d'étirage Ts et la température de fusion Tm.

18. Procédé pour la production du fil polymérique selon la revendication 17, qui comprend les étapes suivantes :
a) la fourniture d'une composition polyamide comprenant au moins un polyamide semi-aromatique ayant une température de fusion Tm de préférence inférieure à 310 °C, mieux encore inférieure à 300 °C et une Tg de préférence d'au moins 110 °C, mieux encore d'au moins 120 °C,
b) la fusion de ladite composition polyamide à une température non supérieure à Tm, pour produire une composition polyamide fondue,
c) l'extrusion de la composition polyamide fondue pour produire un fil polymérique, le refroidissement et l'enroulement dudit fil à une vitesse comprise entre 200 et 2000 m/min.,
d) l'étirage du fil polymérique à une température de préférence entre 140 °C et 200 °C et avec un rapport d'étirage total de préférence de 2,9 : 1 à 5 : 1, mieux encore de 3 : 1 à 4 : 1,
e) la relaxation du fil polymère étiré contraint.

19. Utilisation d'au moins un élément ou tissu de renforcement allongé selon l'une quelconque des revendications 9 à 14 dans la structure de carcasse d'un pneu haute performance (HP), très haute performance (UHP) ou d'un pneu pour véhicules VUS.
